(19) Europäisches Patentamt
European Patent Office
Office européen des brevets

(11) **EP 4 432 587 A1**

(12) **EUROPEAN PATENT APPLICATION**
published in accordance with Art. 153(4) EPC

(43) Date of publication:
**18.09.2024 Bulletin 2024/38**

(21) Application number: **22913973.8**

(22) Date of filing: **30.11.2022**

(51) International Patent Classification (IPC):
**H04L 1/00** (2006.01)  **H04W 4/70** (2018.01)

(52) Cooperative Patent Classification (CPC):
**H04L 1/00; H04W 4/70; H04W 24/02**

(86) International application number:
**PCT/CN2022/135450**

(87) International publication number:
**WO 2023/124718 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2021  CN 202111617274**

(71) Applicant: **Huawei Technologies Co., Ltd.**
**Shenzhen, Guangdong 518129 (CN)**

(72) Inventors:
• **YU, Tianhang**
  **Shenzhen, Guangdong 518129 (CN)**

• **CHEN, Ying**
  **Shenzhen, Guangdong 518129 (CN)**
• **LUO, Hejia**
  **Shenzhen, Guangdong 518129 (CN)**
• **QIAO, Yunfei**
  **Shenzhen, Guangdong 518129 (CN)**
• **LI, Rong**
  **Shenzhen, Guangdong 518129 (CN)**
• **WANG, Jun**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **COMMUNICATION METHOD AND APPARATUS**

(57)     A communication method and apparatus are provided. The method includes: A terminal device receives a first synchronization broadcast block SSB from a network device, where the first SSB indicates that a current network is in a coverage enhancement mode; then, the terminal device determines a target resource of first system information based on the first SSB; and finally, the terminal device receives the first system information from the network device based on the target resource. In the method, transmission of a plurality of repeated SSBs can be supported in the network coverage enhancement mode, and a quantity of transmitted SIB1s can be reduced, to reduce system overheads.

FIG. 3

## Description

### CROSS-REFERENCE TO RELATED APPLICATIONS

This application claims priority to Chinese Patent Application No. 202111617274.1, filed with the China National Intellectual Property Administration on December 27, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a scenario in which 5th generation (5th Generation, 5G) new radio (New Radio, NR) and non-terrestrial networks (Non-Terrestrial Networks, NTN) are integrated, because a transmission path is long, a transmission path loss is large. Generally, to ensure that a user served by a single cell can obtain communication of same quality, coverage of the single cell needs to be reduced, so that a quantity of used base stations increases. Therefore, to reduce communication costs, a network coverage capability (range) of a single base station needs to be enhanced.

However, in a network coverage enhancement scenario, improving initial synchronization performance is crucial. In a cell search phase of initial synchronization, a base station broadcasts a synchronization broadcast block (Synchronization Signal and PBCH block, SSB), where the SSB includes a primary synchronization signal (Primary Synchronization Signal, PSS), a secondary synchronization signal (Secondary Synchronization Signal, SSS), and a physical broadcast channel (physical broadcast channel, PBCH). A terminal device may obtain the PSS, the SSS, and the PBCH by receiving the SSB. Then, the terminal device may implement time-frequency synchronization with the base station based on the PSS and the SSS, and obtain a cell identity. Further, the terminal device obtains a master system message (Master Information Block, MIB) through the PBCH, completes frame timing, and obtains, from the MIB, configuration information of a physical downlink control channel (Physical Downlink Control Channel, PDCCH) and a physical downlink shared channel (Physical Downlink Shared Channel, PDSCH) that are related to a system message 1 (System Information Block Type 1, SIB 1), to detect the SIB 1. Finally, the terminal device obtains configuration parameters of a random access channel from the SIB1, to implement synchronous communication with the base station.

In an NR standard, an SSB set is designed for a beam scanning scenario, and the design is significantly beneficial in a coverage enhancement scenario. However, because each SSB usually corresponds to one SIB1, overheads of the SIB1 are large in the network coverage enhancement scenario. Therefore, a communication method needs to be urgently proposed. In the network coverage enhancement scenario, a quantity of transmitted SIB1s can be reduced, to reduce system overheads.

### SUMMARY

According to a communication method and apparatus, transmission of a plurality of repeated SSBs can be supported in a coverage enhancement scenario, and a quantity of transmitted SIB1s can be reduced, to reduce system overheads.

According to a first aspect, an embodiment of this application provides a communication method. The method may be performed by a processor of a network device, or may be performed by a chip corresponding to the processor. This is not limited herein. Specifically, the following steps are included: The network device determines that a current network is in a coverage enhancement mode; and the network device sends a first synchronization broadcast block SSB, where the first SSB indicates that the current network is in the coverage enhancement mode.

When determining that the current network is in the coverage enhancement mode, the network device sends the first SSB, so that after receiving the first SSB, a terminal device can accurately determine that the current network is in the coverage enhancement mode, and further can communicate with the network device based on a configuration in the mode.

In a possible implementation, the first SSB includes master system information MIB information, and the MIB information indicates that the current network is in the coverage enhancement mode.

In this implementation, the network device may flexibly indicate a coverage status of the current network by using the MIB information in the first SSB. It should be noted that, in practice, the network device may alternatively indicate, to the terminal device in another indication manner, that the current network is in the coverage enhancement mode. For example, because the first SSB includes a PBCH, a reserved bit with high reliability in the PBCH may indicate that the current network is in the coverage enhancement mode.

In a possible implementation, the MIB information includes eight bits, four bits indicate configuration information of the first resource set, the remaining four bits indicate first configuration information, and the first configuration information is used to determine a search space of a downlink control channel of the first system information.

Optionally, in the eight bits included in the MIB information, four most significant bits indicate the configuration information of the first resource set, and four least significant bits indicate the first configuration information.

The configuration information of the first resource set includes a multiplexing mode between the first SSB and the first resource set, a quantity of physical resource blocks PRBs occupied by the first resource set, a quantity of orthogonal frequency division multiplexing OFDM symbols occupied by the first resource set, and an offset between a lower boundary of the first SSB and a lower boundary of the first resource set in frequency domain.

When the multiplexing mode between the first SSB and the first resource set is a first mode, the first configuration information includes a first index number, values of a parameter O and a parameter M, an index of the first OFDM symbol in the search space of the downlink control channel, and a quantity of search spaces of the downlink control channel in each slot; and the first index number is obtained based on binary-to-decimal conversion of the remaining four bits, the parameter O includes information about a start position of the first detection window of the first system information, and the parameter M includes information about a quantity of SSBs corresponding to one first resource set.

Therefore, in the first mode, the four bits in the MIB information respectively indicate the multiplexing mode between the first SSB and the first resource set, the quantity of physical resource blocks PRBs occupied by the first resource set, the quantity of orthogonal frequency division multiplexing OFDM symbols occupied by the first resource set, and the offset between the lower boundary of the first SSB and the lower boundary of the first resource set in frequency domain. The remaining four bits in the MIB information respectively indicate the values of the parameter O and the parameter M included in the first configuration information, the index of the first OFDM symbol in the search space of the downlink control channel, and the quantity of search spaces of the downlink control channel in each slot.

When the multiplexing mode between the first SSB and the first resource set is a second mode or a third mode, the first configuration information includes the index of the first OFDM symbol in the search space of the downlink control channel and position information of the first OFDM symbol.

In this implementation, the network device may specifically use the eight bits in the MIB information, that is, flexibly use four bits to indicate the configuration information of the first resource set, and use the remaining four bits to indicate the first configuration information. After receiving the MIB information from the network device, the terminal device can accurately determine time-frequency resources of the downlink control channel of the first system information, to receive the downlink control channel of the first system information, so as to ensure that the terminal device accurately receives the first system information from the network device, so that the terminal device can obtain configuration parameters of a random access channel, to implement synchronous communication with the network device.

In a possible implementation, the first mode supports a first frequency band and a second frequency band, the first SSB and the first resource set are located on different symbols in time domain, a frequency domain range of the first resource set includes the first SSB, a position of a start resource block RB of the first resource set is lower than or equal to that of a frequency domain lower boundary resource block RB of the first SSB, the first frequency band is a frequency band less than 6 GHz, and the second frequency band is a frequency band greater than 6 GHz; the second mode supports the second frequency band and a first subcarrier combination and a second subcarrier combination of the first SSB and the downlink control channel; and the third mode supports the second frequency band and the first subcarrier combination of the first SSB and the downlink control channel, and the first resource set occupies first two symbols of the first SSB in time domain.

In this implementation, information corresponding to different multiplexing modes between the first SSB and the first resource set can be accurately determined.

In a possible implementation, one bit in the remaining four bits indicates that the current network is in the coverage enhancement mode, and the remaining three bits in the remaining four bits indicate the corresponding first configuration information.

In this implementation, the network device may further flexibly use the four bits in the MIB information, that is, use one bit to indicate that the current network is in the coverage enhancement mode, and use the remaining three bits to indicate the corresponding first configuration information, so that additional system overheads can be reduced.

In a possible implementation, after that the network device determines that the current network is in the coverage enhancement mode, the method further includes: The network device determines the first SSB and a target resource; and the network device sends the first system information on the target resource.

In this implementation, the network device determines the first SSB and the target resource, and sends the first system information by using the target resource. Because indication information in the SSB is in a one-to-one correspondence with resources, after receiving the first SSB, the terminal device side may also accurately determine the target resource of the first system information based on the first SSB, to ensure that the terminal device can finally accurately receive the first system information from the network device.

In a possible implementation, the method further includes: The network device sends a second SSB, where the second SSB is used to retransmit at least one of the following parameters of the first SSB: the MIB information, a primary synchronization signal PSS, and a secondary synchronization signal SSS;

the first SSB corresponds to the first resource set, and the second SSB corresponds to a second resource set; and both the first resource set and the second resource set are one of a plurality of optional resource sets, the first resource set is the same as or different from the second resource set, and the target resource is a resource in one of the first resource set and the second resource set; and
the first system information is one of a plurality of pieces of system information, and the plurality of optional resource sets are in a one-to-one correspondence with the plurality of pieces of system information.

In this implementation, the network device further sends the second SSB, where the second SSB is used to retransmit a parameter of the first SSB, and the second resource set corresponding to the second SSB may be the same as or different from the first resource set corresponding to the first SSB. The terminal device may accurately determine the target resource of the first system information based on the first SSB and/or the second SSB, and then receive the first system information on the target resource. Therefore, when the current network is in the coverage enhancement mode, transmission of a plurality of repeated SSBs can be supported, and a quantity of pieces of transmitted first system information can be reduced, so that system overheads can be reduced.

In a possible implementation, when the multiplexing mode between the first SSB and the first resource set is the first mode, the MIB information includes at least one reserved bit, and the at least one reserved bit indicates that the current network is in the coverage enhancement mode.

In this implementation, when the multiplexing mode between the first SSB and the corresponding first resource set is the first mode, the network device may further flexibly use one reserved bit in the MIB information to indicate that the current network is in the coverage enhancement mode.

In a possible implementation, the at least one reserved bit includes a reserved bit in an index of the first SSB in the MIB information and a spare bit in the MIB information.

In this implementation, the reserved bit of the SSB index or the spare bit in the MIB flexibly indicates that the current network is in the coverage enhancement mode, so that utilization of the reserved bit or the spare bit in the MIB information can be improved.

It should be noted that the SSB index bit in the MIB information is the reserved bit indicating the SSB index, and the spare bit in the MIB information is a spare Spare bit in the MIB information.

In a possible implementation, the method further includes: the at least one reserved bit indicates an index of a target SSB corresponding to the target resource. It should be noted that, the target resource is a resource in one of the first resource set or the second resource set, and the target SSB is an SSB corresponding to a resource set in which the target resource is located.

In this implementation, the reserved bit in the MIB may further flexibly indicate the index of the target SSB corresponding to the target resource, and utilization of the reserved bit in the MIB can be further improved.

In a possible implementation, when the multiplexing mode between the first SSB and the first resource set is the first mode, a half of first index numbers in the first configuration information indicate that the current network is in a coverage normal mode, and the other half of first index numbers in the first configuration information indicate that the current network is in the coverage enhancement mode.

In this implementation, when the multiplexing mode between the first SSB and the corresponding first resource set is the first mode, the first index number in the first configuration information may flexibly indicate that the current network is in the coverage enhancement mode, so that utilization of the first index number in the first configuration information can be improved, and additional system overheads can be reduced.

It should be noted that, the first index numbers in the first configuration information are divided into two parts. Specifically, all the first index numbers in the first configuration information may be evenly divided. To be specific, the first half of first index numbers correspondingly indicate the coverage normal mode, and configuration is performed in the coverage normal mode based on configuration information corresponding to the first half of first index numbers; and the second half of first index numbers correspondingly indicate the coverage enhancement mode, and configuration is performed in the coverage enhancement mode based on configuration information corresponding to the second half of first index numbers. In this application, the first index numbers of the first configuration information may alternatively be divided into two parts according to a protocol or a negotiation agreement. This is not specifically limited herein.

In a possible implementation, when the multiplexing mode between the first SSB and the first resource set is the first mode and the first mode supports the second frequency band, the first configuration information includes at least one reserved index, and the at least one reserved index indicates that the current network is in the coverage enhancement mode.

In this implementation, when the multiplexing mode between the first SSB and the first resource set is the first mode, and the first mode supports the second frequency band, the network device may further flexibly use the at least one reserved index in the first configuration information to indicate that the current network is in the coverage enhancement mode, without using the reserved bit in the MIB information, so that bit overheads of the system can be reduced.

In a possible implementation, when the multiplexing mode between the first SSB and the first resource set is the second mode or the third mode, the first SSB is associated with the search space of the downlink control channel, and the first SSB and the search space of the downlink control channel are located in a same slot of a same radio frame.

In this implementation, association information between the first SSB and the search space of the downlink control channel in the mode is effectively configured.

In a possible implementation, the first configuration information includes at least one of the following: the index of the first OFDM symbol in the search space of the downlink control channel, the position information of the first OFDM symbol, the index of the target SSB, a value of X1, and a value of X2, where X1=X2+1, X2 is a quantity of times of retransmission, and the target SSB is an SSB corresponding to the target resource.

In this implementation, compared with the first configuration information defined in the NR standard, the index of the target SSB and the quantity of times of retransmitting the target SSB are further added in this application. In this way, transmission of a plurality of repeated SSBs can be supported based on the configuration information, and transmission of the first system information can be reduced.

According to a second aspect, an embodiment of this application provides a communication method. The method may be performed by a processor of a terminal device, or may be performed by a chip corresponding to the processor. This is not limited herein. Specifically, the following steps are included: The terminal device receives a first synchronization broadcast block SSB from a network device, where the first SSB indicates that a current network is in a coverage enhancement mode; the terminal device determines a target resource of first system information based on the first SSB; and the terminal device receives the first system information from the network device based on the target resource.

The terminal device receives the first synchronization broadcast block SSB from the network device, and learns, based on the first SSB, that the current network is in the coverage enhancement mode. Further, the terminal device may determine the target resource of the first system information based on the first SSB. Because the target resource is used to transmit a physical downlink control channel of the first system information, and the physical downlink control channel is used to schedule a physical downlink shared channel, it can be ensured that the terminal device can accurately receive the first system information on the physical downlink shared channel.

In a possible implementation, the first SSB includes master system information MIB information, and the MIB information indicates that the current network is in the coverage enhancement mode.

In this implementation, the terminal device can accurately learn of a coverage status of the current network based on an indication of the MIB information in the first SSB. It should be noted that, in practice, the network device may alternatively indicate, to the terminal device in another indication manner, that the current network is in the coverage enhancement mode. For example, because the first SSB includes a PBCH, a reserved bit with high reliability in the PBCH may indicate that the current network is in the coverage enhancement mode.

In a possible implementation, the MIB information includes eight bits, four bits indicate configuration information of the first resource set, the remaining four bits indicate first configuration information, and the first configuration information is used to determine a search space of a downlink control channel of the first system information.

Optionally, in the eight bits included in the MIB information, four most significant bits indicate the configuration information of the first resource set, and four least significant bits indicate the first configuration information.

The configuration information of the first resource set includes a multiplexing mode between the first SSB and the first resource set, a quantity of physical resource blocks PRBs occupied by the first resource set, a quantity of orthogonal frequency division multiplexing OFDM symbols occupied by the first resource set, and an offset between a lower boundary of the first SSB and a lower boundary of the first resource set in frequency domain.

When the multiplexing mode between the first SSB and the first resource set is a first mode, the first configuration information includes a first index number, values of a parameter O and a parameter M, an index of the first OFDM symbol in the search space of the downlink control channel, and a quantity of search spaces of the downlink control channel in each slot; and the first index number is obtained based on binary-to-decimal conversion of the remaining four bits, the parameter O includes information about a start position of the first detection window of the first system information, and the parameter M includes information about a quantity of SSBs corresponding to one first resource set.

Therefore, in the first mode, the four bits in the MIB information respectively indicate the multiplexing mode between the first SSB and the first resource set, the quantity of physical resource blocks PRBs occupied by the first resource set, the quantity of orthogonal frequency division multiplexing OFDM symbols occupied by the first resource set, and the offset between the lower boundary of the first SSB and the lower boundary of the first resource set in frequency domain. The remaining four bits in the MIB information respectively indicate the values of the parameter O and the parameter M included in the first configuration information, the index of the first OFDM symbol in the search space of the downlink control channel, and the quantity of search spaces of the downlink control channel in each slot.

When the multiplexing mode between the first SSB and the first resource set is a second mode or a third mode, the first configuration information includes the index of the first OFDM symbol in the search space of the downlink control channel and position information of the first OFDM symbol.

In this implementation, the terminal device can accurately and effectively determine the first resource set of the first system information and the search space of the downlink control channel of the first system information based on the information correspondingly indicated by the eight bits included in the MIB information, so that the terminal device can accurately receive the first system information from the network device, and the terminal device can further obtain configuration parameters of a random access channel from the network device, to implement synchronous communication with the network device.

In a possible implementation, there are three multiplexing modes between the first SSB and the first resource set, the first mode supports a first frequency band and a second frequency band, the first SSB and the first resource set are located on different symbols in time domain, a frequency domain range of the first resource set includes the first SSB, a position of a start resource block RB of the first resource set is lower than or equal to that of a frequency domain lower boundary resource block RB of the first SSB, the first frequency band is a frequency band less than 6 GHz, and the second frequency band is a frequency band greater than 6 GHz; the second mode supports the second frequency band and a first subcarrier combination and a second subcarrier combination of the first SSB and the downlink control channel; and the third mode supports the second frequency band and the first subcarrier combination of the first SSB and the downlink control channel, and the first resource set occupies first two symbols of the first SSB in time domain.

In this implementation, information corresponding to different multiplexing modes between the first SSB and the first resource set can be accurately determined.

In a possible implementation, one bit in the remaining four bits indicates that the current network is in the coverage enhancement mode, and the remaining three bits in the remaining four bits indicate the corresponding first configuration information.

In this implementation, the terminal device may learn, based on the four bits that are in the MIB information and that indicate the first configuration information, whether the current network is in the coverage enhancement mode, and may further accurately determine the first configuration information corresponding to the coverage enhancement mode. Because the first configuration information is used to determine the search space of the downlink control channel of the first system information, the terminal device can accurately receive the first system information from the network device based on the first configuration information.

In a possible implementation, the method further includes: The terminal device receives a second SSB from the network device, where the second SSB is used to retransmit at least one of the following parameters of the first SSB: the MIB information, a primary synchronization signal PSS, and a secondary synchronization signal SSS; the first SSB corresponds to the first resource set, and the second SSB corresponds to a second resource set; both the first resource set and the second resource set are one of a plurality of optional resource sets, and the first resource set is the same as or different from the second resource set; and the first system information is one of a plurality of pieces of system information, and the plurality of optional resource sets are in a one-to-one correspondence with the plurality of pieces of system information.

In this implementation, the terminal device receives the second SSB from the network device. Because the second SSB is used to retransmit a parameter of the first SSB, and the second resource set corresponding to the second SSB may be the same as or different from the first resource set corresponding to the first SSB, a plurality of repeated SSBs can be transmitted in the coverage enhancement mode.

In a possible implementation, that the terminal device determines the target resource of the first system information based on the first SSB includes: The terminal device determines the target resource of the first system information based on the first SSB and/or the second SSB, where the target resource is a resource in one of the first resource set and the second resource set.

In this implementation, when the current network is in the coverage enhancement mode, the terminal device may determine the target resource of the first system information based on the first SSB and/or the second SSB. Therefore, when a plurality of SSBs are transmitted, transmission of the first system information can be reduced, so that system overheads can be reduced.

In a possible implementation, when the multiplexing mode between the first SSB and the first resource set is the first mode, the MIB information includes at least one reserved bit, and the at least one reserved bit indicates that the current network is in the coverage enhancement mode.

In this implementation, when the multiplexing mode between the first SSB and the corresponding first resource set is the first mode, the terminal device may accurately learn, based on one reserved bit in the MIB information, that the current network is in the coverage enhancement mode.

In a possible implementation, the at least one reserved bit includes an index bit of the SSB in the MIB information and a spare bit in the MIB information.

In this implementation, the network device may flexibly use the SSB index bit or the spare bit in the MIB information to indicate, to the terminal device, that the current network is in the coverage enhancement mode, so that utilization of the reserved bit or the spare bit in the MIB information can be improved.

It should be noted that, the SSB index bit in the MIB information is the reserved bit indicating the SSB index, and the spare bit in the MIB information is a spare Spare bit in the MIB information.

In a possible implementation, the method further includes: the at least one reserved bit indicates an index of a target SSB corresponding to the target resource.

In this implementation, the reserved bit in the MIB information may further flexibly indicate the index of the target SSB corresponding to the target resource.

In a possible implementation, when the multiplexing mode between the first SSB and the first resource set is the first mode, a part of first index numbers in the first configuration information indicate that the current network is in a coverage normal mode, and the other part of first index numbers in the first configuration information indicate that the current network is in the coverage enhancement mode.

In this implementation, when the multiplexing mode between the first SSB and the corresponding first resource set is the first mode, the first index number in the first configuration information may flexibly indicate that the current network is in the coverage enhancement mode.

It should be noted that, the first index numbers in the first configuration information are divided into two parts. Specifically, all the first index numbers in the first configuration information may be evenly divided. To be specific, the first half of first index numbers correspondingly indicate the coverage normal mode, and configuration is performed in the coverage normal mode based on configuration information corresponding to the first half of first index numbers; and the second half of first index numbers correspondingly indicate the coverage enhancement mode, and configuration is performed in the coverage normal mode based on configuration information corresponding to the second half of first index numbers. In this application, the first index numbers of the first configuration information may alternatively be divided into two parts according to a protocol or a negotiation agreement. This is not specifically limited herein.

In a possible implementation, when the multiplexing mode between the first SSB and the first resource set is the first mode and the first mode supports the second frequency band, the first configuration information includes at least one reserved index, and the at least one reserved index indicates that the current network is in the coverage enhancement mode.

In this implementation, when the multiplexing mode between the first SSB and the first resource set is the first mode, and the first mode supports the second frequency band, the at least one reserved index in the first configuration information may further flexibly indicate, to the terminal device, that the current network is in the coverage enhancement mode, without using the reserved bit in the MIB information, so that the reserved bit can be prevented from being occupied.

In a possible implementation, when the multiplexing mode between the first SSB and the first resource set is the second mode or the third mode, the first SSB is associated with the search space of the downlink control channel, and the first SSB and the search space of the downlink control channel are located in a same slot of a same radio frame.

In this implementation, when the multiplexing mode between the first SSB and the first resource set is the second mode or the third mode, association information between the first SSB and the search space of the downlink control channel in the mode may be determined.

In a possible implementation, the first configuration information further includes at least one of the following: an index of a target SSB, a value of X1, and a value of X2, where X1=X2+1, X2 is a quantity of times of retransmission, and the target SSB is an SSB corresponding to the target resource.

In this implementation, when the multiplexing mode between the first SSB and the first resource set is the second mode or the third mode, compared with the first configuration information defined in the NR standard, the index of the target SSB and the quantity of times of retransmitting the target SSB are added in this application, so that a plurality of repeated SSBs can be transmitted based on the added first configuration information.

According to a third aspect, this application further provides a network device. The network device may include a transceiver module and a processing module.

The processing module is configured to determine that a current network is in a coverage enhancement mode; and the transceiver module is configured to send a first synchronization broadcast block SSB, where the first SSB indicates that the current network is in the coverage enhancement mode.

In a possible design, the first SSB includes master system information MIB information, and the MIB information indicates that the current network is in the coverage enhancement mode.

In a possible design, the MIB information includes eight bits, four bits indicate configuration information of a first resource set, the remaining four bits indicate first configuration information, and the first configuration information is used to determine a search space of a downlink control channel of the first system information;

the configuration information of the first resource set includes a multiplexing mode between the first SSB and the first resource set, a quantity of physical resource blocks PRBs occupied by the first resource set, a quantity of orthogonal frequency division multiplexing OFDM symbols occupied by the first resource set, and an offset between a lower boundary of the first SSB and a lower boundary of the first resource set in frequency domain; and

when the multiplexing mode between the first SSB and the first resource set is a first mode, the first configuration information includes a first index number, values of a parameter O and a parameter M, an index of the first OFDM symbol in the search space of the downlink control channel, and a quantity of search spaces of the downlink control channel in each slot; and the first index number is obtained based on binary-to-decimal conversion of the remaining four bits, the parameter O includes information about a start position of the first detection window of the first system information, and the parameter M includes information about a quantity of SSBs corresponding to one first resource set; or

when the multiplexing mode between the first SSB and the first resource set is a second mode or a third mode, the first configuration information includes the index of the first OFDM symbol in the search space of the downlink control channel and position information of the first OFDM symbol.

Optionally, the MIB information includes eight bits, four most significant bits may indicate the configuration information of the first resource set, and four least significant bits indicate the first configuration information.

In a possible design, there are three multiplexing modes between the first SSB and the first resource set, the first mode supports a first frequency band and a second frequency band, the first SSB and the first resource set are located on different symbols in time domain, a frequency domain range of the first resource set includes the first SSB, a position of a start resource block RB of the first resource set is lower than or equal to that of a frequency domain lower boundary resource block RB of the first SSB, the first frequency band is a frequency band less than 6 GHz, and the second frequency band is a frequency band greater than 6 GHz; the second mode supports the second frequency band and a first subcarrier combination and a second subcarrier combination of the first SSB and the downlink control channel; and the third mode supports the second frequency band and the first subcarrier combination of the first SSB and the downlink control channel, and the first resource set occupies first two symbols of the first SSB in time domain.

In a possible design, one bit in the remaining four bits indicates that the current network is in the coverage enhancement mode, and the remaining three bits in the remaining four bits indicate the corresponding first configuration information.

In a possible design, the processing module is further configured to: after determining that the current network is in the coverage enhancement mode, determine the first SSB and the target resource; and send, by the network device, the first system information on the target resource.

In a possible design, the transceiver module is further configured to send a second SSB, where the second SSB is used to retransmit at least one of the following parameters of the first SSB: the MIB information, a primary synchronization signal PSS, and a secondary synchronization signal SSS;

the first SSB corresponds to the first resource set, and the second SSB corresponds to a second resource set; and both the first resource set and the second resource set are one of a plurality of optional resource sets, the first resource set is the same as or different from the second resource set, and the target resource is a resource in one of the first resource set and the second resource set; and

the first system information is one of a plurality of pieces of system information, and the plurality of optional resource sets are in a one-to-one correspondence with the plurality of pieces of system information.

In a possible design, when the multiplexing mode between the first SSB and the first resource set is the first mode, the MIB information includes at least one reserved bit, and the at least one reserved bit indicates that the current network is in the coverage enhancement mode.

In a possible design, the at least one reserved bit includes a reserved bit in an index of the first SSB in the MIB information and a spare bit in the MIB information.

In a possible design, the at least one reserved bit indicates an index of a target SSB corresponding to the target resource.

In a possible design, when the multiplexing mode between the first SSB and the first resource set is the first mode, a half of first index numbers in the first configuration information indicate that the current network is in a coverage normal mode, and the other half of first index numbers in the first configuration information indicate that the current network is in the coverage enhancement mode.

In a possible design, when the multiplexing mode between the first SSB and the first resource set is the first mode and the first mode supports the second frequency band, the first configuration information includes at least one reserved index, and the at least one reserved index indicates that the current network is in the coverage enhancement mode.

In a possible design, when the multiplexing mode between the first SSB and the first resource set is the second mode or the third mode, the first SSB is associated with the search space of the downlink control channel, and the first SSB and the search space of the downlink control channel are located in a same slot of a same radio frame.

In a possible design, the first configuration information includes at least one of the following: the index of the first OFDM symbol in the search space of the downlink control channel, the position information of the first OFDM symbol, the index of the target SSB, a value of X1, and a value of X2, where X1=X2+1, X2 is a quantity of times of retransmission, and the target SSB is an SSB corresponding to the target resource.

According to a fourth aspect, this application further provides a terminal device. The terminal device may include a transceiver module and a processing module.

The transceiver module is configured to obtain a first synchronization broadcast block SSB, where the first SSB indicates that a current network is in a coverage enhancement mode; the processing module is configured to determine a target resource of first system information based on the first SSB; and the transceiver module is further configured to receive the first system information from a network device based on the target resource.

In a possible design, the first SSB includes master system information MIB information, and the MIB information indicates that the current network is in the coverage enhancement mode.

In a possible design, the MIB information includes eight bits, four bits indicate configuration information of the first resource set, the remaining four bits indicate first configuration information, and the first configuration information is used to determine a search space of a downlink control channel of the first system information;

> the configuration information of the first resource set includes a multiplexing mode between the first SSB and the first resource set, a quantity of physical resource blocks PRBs occupied by the first resource set, a quantity of orthogonal frequency division multiplexing OFDM symbols occupied by the first resource set, and an offset between a lower boundary of the first SSB and a lower boundary of the first resource set in frequency domain; and
> when the multiplexing mode between the first SSB and the first resource set is a first mode, the first configuration information includes a first index number, values of a parameter O and a parameter M, an index of the first OFDM symbol in the search space of the downlink control channel, and a quantity of search spaces of the downlink control channel in each slot; and the first index number is obtained based on binary-to-decimal conversion of the remaining four bits, the parameter O includes information about a start position of the first detection window of the first system information, and the parameter M includes information about a quantity of SSBs corresponding to one first resource set; or
> when the multiplexing mode between the first SSB and the first resource set is a second mode or a third mode, the first configuration information includes the index of the first OFDM symbol in the search space of the downlink control channel and position information of the first OFDM symbol.

In a possible design, there are three multiplexing modes between the first SSB and the first resource set, the first mode supports a first frequency band and a second frequency band, the first SSB and the first resource set are located on different symbols in time domain, a frequency domain range of the first resource set includes the first SSB, a position of a start resource block RB of the first resource set is lower than or equal to that of a frequency domain lower boundary resource block RB of the first SSB, the first frequency band is a frequency band less than 6 GHz, and the second frequency band is a frequency band greater than 6 GHz; the second mode supports the second frequency band and a first subcarrier combination and a second subcarrier combination of the first SSB and the downlink control channel; and the third mode supports the second frequency band and the first subcarrier combination of the first SSB and the downlink control channel, and the first resource set occupies first two symbols of the first SSB in time domain.

In a possible design, one bit in the remaining four bits indicates that the current network is in the coverage enhancement mode, and the remaining three bits in the remaining four bits indicate the corresponding first configuration information.

In a possible design, the transceiver module is further configured to receive a second SSB from the network device, where the second SSB is used to retransmit at least one of the following parameters of the first SSB: the MIB information, a primary synchronization signal PSS, and a secondary synchronization signal SSS; the first SSB corresponds to the first resource set, and the second SSB corresponds to a second resource set; both the first resource set and the second resource set are one of a plurality of optional resource sets, and the first resource set is the same as or different from the second resource set; and the first system information is one of a plurality of pieces of system information, and the plurality of optional resource sets are in a one-to-one correspondence with the plurality of pieces of system information.

In a possible design, when determining the target resource of the first system information based on the first SSB, the processing module is specifically configured to: determine the target resource of the first system information based on the first SSB and/or the second SSB, where the target resource is a resource in one of the first resource set and the second resource set.

In a possible design, when the multiplexing mode between the first SSB and the first resource set is the first mode, the MIB information includes at least one reserved bit, and one reserved bit in the at least one reserved bit indicates that the current network is in the coverage enhancement mode.

In a possible design, the at least one reserved bit includes an index bit of the SSB in the MIB information and a spare bit in the MIB information.

In a possible design, the at least one reserved bit indicates an index of a target SSB corresponding to the target resource.

In a possible design, when the multiplexing mode between the first SSB and the first resource set is the first mode, a part of first index numbers in the first configuration information indicate that the current network is in a coverage normal mode, and the other part of first index numbers in the first configuration information indicate that the current network is in the coverage enhancement mode.

In a possible design, when the multiplexing mode between the first SSB and the first resource set is the first mode and the first mode supports the second frequency band, the first configuration information includes at least one reserved index, and the at least one reserved index indicates that the current network is in the coverage enhancement mode.

In a possible design, when the multiplexing mode between the first SSB and the first resource set is the second mode or the third mode, the first SSB is associated with the search space of the downlink control channel, and the first SSB and the search space of the downlink control channel are located in a same slot of a same radio frame.

In a possible design, the first configuration information further includes at least one of the following: an index of a target SSB, a value of X1, and a value of X2, where X1=X2+1, X2 is a quantity of times of retransmission, and the target SSB is an SSB corresponding to the target resource.

According to a fifth aspect, an embodiment of this application provides a communication apparatus. The communication apparatus includes a processor coupled to a memory. The memory stores a computer program or a computer instruction, and the processor is configured to invoke and run the computer program or the computer instruction stored in the memory, so that the processor implements any one of the first aspect or the possible implementations of the first aspect, or the processor implements any one of the second aspect or the possible implementations of the second aspect.

Optionally, the communication apparatus further includes the foregoing memory. Optionally, the memory and the processor are integrated together.

Optionally, the communication apparatus further includes a transceiver. The processor is configured to control the transceiver to receive and send a signal and/or information and/or data, and the like.

According to a sixth aspect, an embodiment of this application provides a communication apparatus, where the communication apparatus includes a processor. The processor is configured to invoke a computer program or a computer instruction in a memory, so that the processor implements any one of the first aspect or the possible implementations of the first aspect, or the processor is configured to perform any one of the second aspect or the possible implementations of the second aspect.

The communication apparatus further includes a transceiver. The processor is configured to control the transceiver to receive and send a signal and/or information and/or data, and the like.

According to a seventh aspect, an embodiment of this application provides a communication apparatus. The communication apparatus includes a processor. The processor is configured to perform any one of the first aspect or the possible implementations of the first aspect, or the processor is configured to perform any one of the second aspect or the possible implementations of the second aspect.

According to an eighth aspect, an embodiment of this application further provides a computer program product including instructions. When the computer program product is run on a computer, the computer is enabled to perform any one of the first aspect or the possible implementations of the first aspect, or the computer is enabled to perform any one of the second aspect or the possible implementations of the second aspect.

According to a ninth aspect, an embodiment of this application further provides a computer-readable storage medium, including computer instructions. When the instructions are run on a computer, the computer is enabled to perform any one of the first aspect or the possible implementations of the first aspect, or the computer is enabled to perform any one of the second aspect or the possible implementations of the second aspect.

According to a tenth aspect, an embodiment of this application further provides a chip apparatus, including a processor, configured to invoke a computer program or a computer instruction in a memory, so that the processor performs any one of the first aspect or the possible implementations of the first aspect, or the processor performs any one of the second aspect or the possible implementations of the second aspect.

Optionally, the processor is coupled to the memory through an interface.

For technical effects that can be achieved in any one of the third aspect or the possible designs of the third aspect, refer to descriptions of technical effects that can be achieved in any one of the first aspect or the possible implementations of the first aspect. For technical effects that can be achieved in any one of the fourth aspect or the possible designs of the fourth aspect, refer to descriptions of technical effects that can be achieved in any one of the second aspect or the possible implementations of the second aspect. Details are not described herein again.

**BRIEF DESCRIPTION OF DRAWINGS**

FIG. 1 is a communication system to which a communication method is applicable according to an embodiment of this application;

FIG. 2 is a schematic flowchart of a communication method according to an embodiment of this application;

FIG. 3 is a schematic flowchart of several specific embodiments of a communication method according to an embodiment of this application;

FIG. 4 is a schematic diagram of a structure of a communication apparatus according to an embodiment of this application;

FIG. 5 is a schematic diagram of a structure of a communication apparatus according to an embodiment of this application; and

FIG. 6 is a schematic diagram of a structure of a chip according to an embodiment of this application.

**DESCRIPTION OF EMBODIMENTS**

Embodiments of this application provide a communication method and apparatus. The method and the apparatus are based on a same or similar technical concept. Because the method and the apparatus have a similar problem-resolving principle, mutual reference may be made to implementation of the apparatus and the method. Repeated parts are not described in detail.

For ease of understanding the technical solutions in embodiments of this application, the following first briefly describes an existing wireless communication technology.

A frequency band of a 5th generation (5th Generation, 5G) mobile communication network may reach several GHz or even dozens of GHz, and therefore faces a large path loss. In particular, in a scenario in which 5G new radio (new radio, NR) and non-terrestrial networks (non-terrestrial networks, NTN) are integrated, because a transmission path is long, a transmission path loss is large. Generally, to ensure that a user served by a single cell can obtain communication of same quality, coverage of the single cell needs to be reduced, so that a quantity of used base stations increases. Therefore, to reduce communication costs, a network coverage capability (range) of a single base station needs to be enhanced.

In a network coverage enhancement scenario, improving initial synchronization performance is crucial. In a cell search phase of initial synchronization, a base station broadcasts a synchronization broadcast block (synchronization signal and PBCH block, SSB), where the SSB includes a primary synchronization signal (primary synchronization signal, PSS), a secondary synchronization signal (secondary synchronization signal, SSS), and a physical broadcast channel (physical broadcast channel, PBCH). A terminal device may obtain the PSS, the SSS, and the PBCH by receiving the SSB. Then, the terminal device may implement time-frequency synchronization with the base station based on the PSS and the SSS, and obtain a cell identity. Further, the terminal device obtains a system message (master information block, MIB) by using the PBCH, completes frame timing, and obtains, from the MIB, configuration information of a physical downlink control channel (physical downlink control channel, PDCCH) and a physical downlink shared channel (physical downlink shared channel, PDSCH) that are related to the system message 1 (system information block type 1, SIB1), to detect the SIB1. Finally, the terminal device obtains configuration parameters of a random access channel from the SIB1, to implement synchronous communication with the base station.

To enhance a network coverage capability of a single base station, in the NR standard, an SSB set is designed for a beam scanning scenario. One SSB set may be limited within a half-frame of 5 milliseconds (millisecond, ms), each SSB in a same period corresponds to one beam direction by using the SSB set as the period, and the terminal device is supported in performing SSB detection in each beam sweeping direction. When a communication system operates at a low frequency and does not need to use beam scanning, the terminal device may combine a plurality of SSBs in the SSB set. In addition, when the plurality of SSBs are combined, a design of the SSB set still helps improve a network coverage capability.

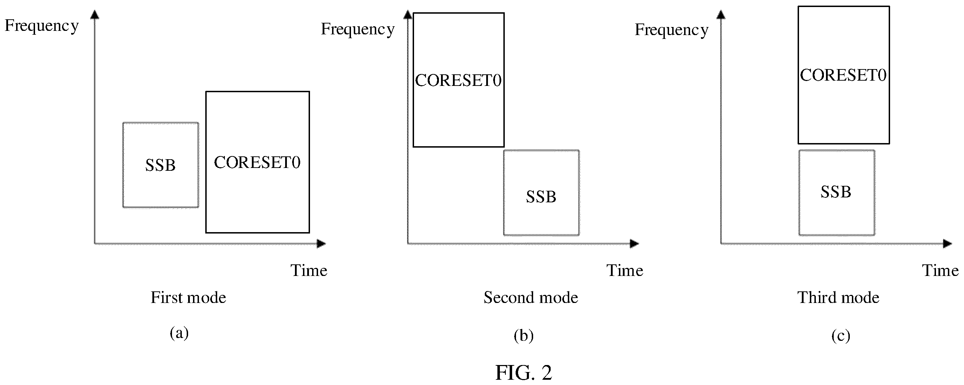

A physical downlink control channel PDCCH corresponding to the SIB 1 is mapped to a type 0-PDCCH common search space (common search space, CSS), and the type 0-PDCCH CSS is mapped to a control resource set 0 (control resource set 0, CORESET0). In the NR standard, there is a definition that each SSB corresponds to one CORESET0, and there are three multiplexing modes between the SSB and the CORESET0, as shown in FIG. 2. Configurations of the CORESET0 and the type 0-PDCCH CSS are indicated by 8-bit information in total in the MIB. Four most significant bits indicate the configuration of the CORESET0, including a type of a multiplexing mode between the SSB and the CORESET0, a quantity of physical resource blocks (physical resource block, PRB) occupied by the CORESET0, a quantity of orthogonal frequency division multiplexing (orthogonal frequency division multiplexing, OFDM) symbols occupied by the CORESET0, and an offset between a lower boundary of the SSB and a lower boundary of the CORESET0

in frequency domain. Four least significant bits indicate the configuration of the type 0-PDCCH CSS, including values of a parameter O and a parameter M (only for a first mode), an index of the first OFDM symbol in the CSS, and a quantity of CSSs in each slot (only for the first mode).

In the NR standard, in a beam scanning process, the terminal device needs to receive the SSB and the SIB1 in one beam. Therefore, each SSB corresponds to one CORESETO, that is, each SSB corresponds to one SIB1. A quantity of resources occupied by the SSB is fixed, and a quantity of bits, a quantity of occupied symbols, a modulation and coding scheme (modulation and coding scheme, MCS), and the like of the SIB1 may be configured. Therefore, the PDCCH and the PDSCH of the SIB1 can achieve better detection performance than the PSS, the SSS, and the PBCH in the SSB. In a coverage enhancement scenario, it is necessary to improve synchronization and detection performance for the SSB through combination. However, the SIB1 includes hundreds or even thousands of bits. If one SIB1 is sent for each SSB, a large quantity of unnecessary overheads are caused.

Therefore, this application provides a communication method. In the method, transmission of a plurality of repeated SSBs can be supported in a network coverage enhancement mode, and a quantity of transmitted SIBls can be reduced, to reduce system overheads.

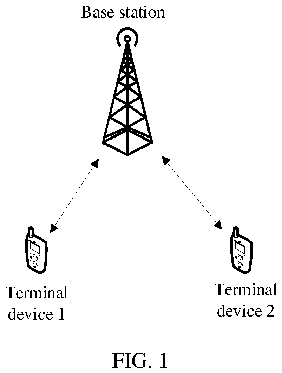

For ease of understanding the technical solutions in embodiments of this application, the following shows, with reference to FIG. 1, a possible communication system to which a beam use method provided in embodiments of this application is applicable.

FIG. 1 is a schematic diagram of a wireless communication system according to an embodiment of this application. As shown in FIG. 1, the wireless communication system includes a plurality of cells, and each cell includes one base station (base station, BS). The base station may provide a communication service for a plurality of terminal devices (for example, a terminal device 1 and a terminal device 2). Each base station includes a baseband unit (baseband unit, BBU) and a remote radio unit (remote radio unit, RRU). The BBU and the RRU may be placed in different places. For example, the RRU is remote, and may be placed in a high-traffic area, the BBU is placed in a central equipment room, the BBU and the RRU may alternatively be placed in a same equipment room, or the BBU and the RRC may be different components in a rack. This is not specifically limited in this application.

It should be noted that the solutions of the present invention may be applied to a wireless communication system such as 5G or satellite communication. The wireless communication system includes but is not limited to: a narrow band-internet of things (narrow band-internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, a long term evolution (long term evolution, LTE) system, three application scenarios: eMBB, URLLC, and eMTC of the 5G mobile communication system, and a next-generation communication system such as a sixth-generation mobile communication system.

A communication method provided in embodiments of this application is mainly applied to a wireless communication network such as 5G or satellite communication, and may be applied to another wireless communication network scenario. A communication process may occur between a network device and a terminal device.

The following describes the terminal device and the network device in this application.

The terminal device may be a wireless terminal device that can receive scheduling and indication information from the network device. The terminal device may be a device that provides a user with voice and/or data connectivity, a handheld device with a wireless connection function, or another processing device connected to a wireless modem.

The terminal device is also referred to as user equipment (user equipment, UE), a mobile station (mobile station, MS), a mobile terminal (mobile terminal, MT), or the like. The terminal device is a device that includes a wireless communication function (providing the user with voice/data connectivity), for example, a handheld device or a vehicle-mounted device having a wireless connection function. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in the Internet of Vehicles, a wireless terminal in self driving (self driving), a wireless terminal in remote medical surgery (remote medical surgery), a wireless terminal in a smart grid (smart grid), a wireless terminal in transportation safety

(transportation safety), a wireless terminal in a smart city (smart city), a wireless terminal in a smart home (smart home), or the like. For example, the wireless terminal in the Internet of Vehicles may be a vehicle-mounted device, an entire vehicle device, an in-vehicle module, a vehicle, or the like. The wireless terminal in industrial control may be a camera, a robot, or the like. The wireless terminal in the smart home may be a television, an air conditioner, a sweeper, a sound box, a set-top box, or the like.

The terminal device may be widely used in various scenarios, such as device-to-device (device-to-device, D2D) communication, vehicle to everything (vehicle to everything, V2X) communication, machine-type communication (machine-type communication, MTC), the internet of things (internet of things, IoT), virtual reality, augmented reality, industrial control, autonomous driving, telemedicine, a smart grid, smart furniture, smart office, smart wear, smart transportation, and a smart city.

The network device may be a device in a wireless network. For example, the network device may be a device deployed in a radio access network for providing a wireless communication function for the terminal device. For example, the network device may be a radio access network (radio access network, RAN) node that connects the terminal device to a wireless network, and may also be referred to as an access network device.

The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP), a wireless relay node, a wireless backhaul node, a transmission point (transmission point, TP), or a transmission and reception point (transmission and reception point, TRP) in a wireless fidelity (wireless fidelity, Wi-Fi) system, or a network device in a 5G mobile communication system. For example, the network device is a next generation NodeB (next generation NodeB, gNB), a transmission reception point (transmission reception point, TRP), or a TP in the NR system; or one antenna panel or one group of antenna panels (including a plurality of antenna panels) of a base station in the 5G mobile communication system. Alternatively, the network device may be a network node that forms the gNB or the transmission point, for example, a BBU, a distributed unit (distributed unit, DU), or the like. Alternatively, the network device may be a terminal device that undertakes a base station function in V2X communication, M2M communication, or D2D communication, or the like.

The base station is an apparatus deployed in the radio access network for providing a wireless communication function for the MS. The base station may include a macro base station, a micro base station (also referred to as a small cell), a relay station, an access point, and the like in various forms. In systems that use different radio access technologies, names of devices having a base station function may be different. For example, in 5G NR, the device is referred to as a next-generation base station gNB; in an LTE system, the device is referred to as an evolved NodeB (evolved NodeB, eNB or eNodeB); and in a 3rd generation (3rd Generation, 3G) system, the device is referred to as a NodeB (English: NodeB). In addition, the base station may alternatively be a satellite. For ease of description, in all embodiments of this application, the foregoing apparatus that provides the wireless communication function for the MS is collectively referred to as a network device, a base station, or a BS.

The terminal device and the network device may communicate with each other by using an air interface (Uu) link, a non-terrestrial network (non-terrestrial network, NTN) communication link, or the like between the terminal device and the network device, and the terminal devices may communicate with each other by using a sidelink (sidelink, SL) such as D2D. Specifically, the terminal device may be in a connected state or an active state (active), or may be in a non-connected state (inactive) or an idle state (idle), or may be in another state, for example, a state in which the terminal device is not attached to a network or does not perform downlink synchronization with the network.

Communication may be performed between a network device and a terminal device, between network devices, and between terminal devices by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), for example, by using a 700/900 mega hertz (mega hertz, MHz) or 2.1/2.6/3.5 GHz frequency band, or may be performed by using a spectrum above 6 GHz, for example, by using a millimeter wave or tera hertz (tera hertz, THz) wave, or may be performed by using both a spectrum below 6 GHz and a spectrum above 6 GHz. A spectrum resource used for wireless communication is not limited in embodiments of this application.

For ease of understanding the technical solutions in this application, the following describes some technical terms in this application.

(1) Network coverage mode

Network coverage means that all devices within a specified radius with a transmission point as a center of a circle can receive signals. In other words, a size covered by the circle is a network coverage size. A network in the network coverage is usually a wireless signal network, for example, an effective signal receiving range of a device such as a mobile phone network or a wireless network. For example, a network device is used as a transmission point, and network coverage is a range in which a terminal device can receive a network signal.

In embodiments of this application, modes of network coverage mainly include a normal mode of network coverage and an enhancement mode of network coverage. In the normal mode of network coverage, the terminal device may communicate with the network device according to an existing NR standard. In the enhancement mode of network coverage, an SSB set is designed in the NR standard for a beam scanning scenario. The SSB set is used as a period, and each SSB in a same period corresponds to one beam direction, so that the terminal device can be supported in performing SSB detection in each beam scanning direction, thereby ensuring that the terminal device in the network coverage range can obtain high communication quality. If a communication system operates at a low frequency, beam scanning does not need to be used, and the terminal device may combine a plurality of SSBs in the SSB set.

(2) Resource set

A resource set in this application is mainly a resource set of control information (control-resource set, CORESET). The CORESET includes a physical resource (resource grid) set, and further includes some parameter sets, for example, PDCCH information and downlink control information (downlink control information, DCI). The CORESET is mainly used to carry a PDCCH (DCI). Therefore, the PDCCH in NR is designed to be sent in a configurable control resource set (CORESET).

In frequency domain, a reference point of the CORESET is a bandwidth part (bandwidth part, BWP), and a control area of LTE is an entire channel (channelbandwidth, CBW) in frequency domain. In time domain, LTE is controlled by a physical control format indicator channel (physical control format indicator channel, PCFICH), and NR is controlled by a radio resource control (Radio Resource Control, RRC) parameter ControlResourceSet.duration. Because system bandwidth in NR is large, for example, FR1 can reach a maximum of 100 MHz, and FR2 can reach a maximum of 400 MHz, if the PDCCH still occupies the entire bandwidth in frequency domain as in LTE, not only a resource waste is caused, but also blind detection complexity is high. Therefore, in NR, information such as a frequency band occupied by the PDCCH in frequency domain and a quantity of OFDM symbols occupied by the PDCCH in time domain is encapsulated in the CORESET, and information such as an index of a start OFDM symbol of the PDCCH and a PDCCH monitoring period is encapsulated in a search space. In other words, a configuration of the PDCCH is a combination of the CORESET and the search space.

A CORESET0 is a special CORESET, and the information belongs to a part of an initial part bandwidth configuration information, and may be provided for the terminal device by using MIB information. The CORESET0 encapsulates initially accessed SIB1 information, in other words, the CORESET0 is a PDCCH dedicated to sending a decoded SIB message. Other parameters related to the CORESET are all configured through RRC, but the CORESET0 needs to be scheduled before the RRC is established. Therefore, the CORESET0 is determined based on some other predefined parameters.

(3) Search space

In embodiments of this application, the search space (Search Space) represents an area of a resource set CORESET of control information, and the terminal device needs to monitor the search space to detect a specific PDCCH/DCI. In 5G NR, the search space is divided into a common search space (common search space, CSS) and a terminal device specific search space (UE specific search space, USS). The CSS is mainly used for control information related to a BCCH, paging, and RAR during access and cell handover. The USS is mainly used after access, and is used to transmit control information (terminal device level information) related to a downlink shared channel (downlink shared channel, DL-SCH) and an uplink shared channel (uplink shared channel, UL-SCH).

Generally, a common search space CSS of a PDCCH corresponding to a SIB 1 is a type 0 PDCCH CSS, and a CORESET bound to the SIB1 is the CORESET0. A start time domain position of the PDCCH is determined by a configuration of a current search space, and a quantity of time domain symbols is determined by a CORESET associated with the search space. Therefore, a time domain resource scheduling status of a candidate PDCCH corresponding to a SIB may be determined based on configurations of the current search space and the associated CORESET.

(4) "A plurality of" in embodiments of this application means two or more. "And/or" describes an association relationship between associated objects, and represents that three relationships may exist. For example, A and/or B may represent the following cases: Only A exists, both A and B exist, and only B exists. The character "/" generally indicates an "or" relationship between the associated objects. In addition, it should be understood that, in the description of this application, terms such as "first" and "second" are used only for purposes of distinguishing descriptions, and cannot be understood as indicating or implying relative importance, or as indicating or implying a sequence.

(5) The terms "including", "having", and any other variant thereof mentioned in descriptions of embodiments of this application are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device. It should be noted that, in embodiments of this application, the word "example" or "for example" or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

The following describes the technical solutions of this application with reference to specific embodiments.

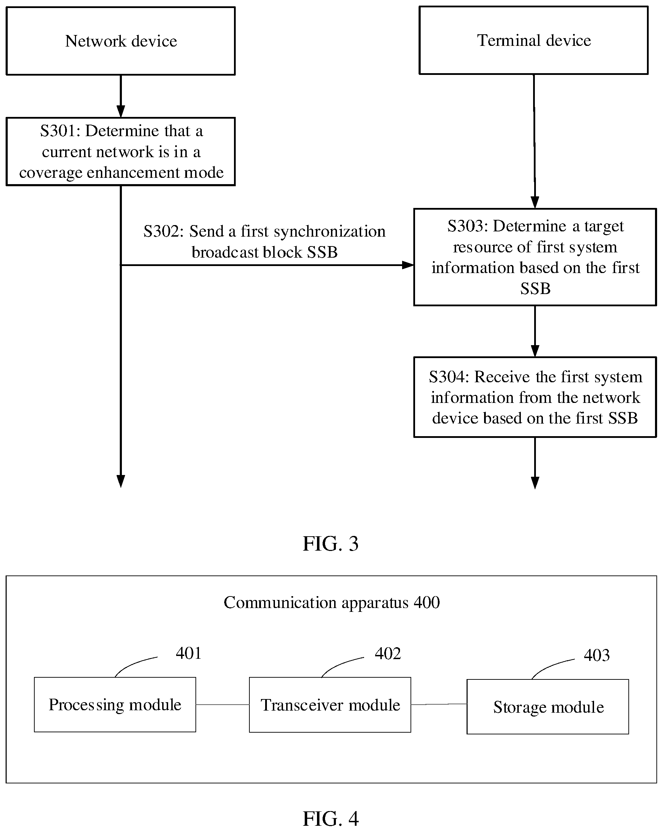

FIG. 3 is a schematic flowchart of a communication method according to an embodiment of this application. The communication method may be performed by a transceiver and/or a processor of a network device (terminal device), or may be performed by a chip corresponding to the transceiver and/or the processor. Alternatively, this embodiment may be implemented by a controller or a control device connected to the network device (terminal device), and the controller or the control device is configured to manage at least one network device including the network device. In addition, a form of a specific apparatus for performing this embodiment is not specifically limited in this application. In addition, in actual application, in this embodiment of this application, the network device may manage a plurality of terminal devices. Therefore, for each of the plurality of terminal devices managed by the network device, refer to the terminal device in the foregoing steps S301 to S304 to implement communication with the network device.

With reference to FIG. 3, a specific procedure of the method is as follows:

S301: The network device determines that a current network is in a coverage enhancement mode.

Specifically, the network device may determine, based on a planned service range during network deployment, whether the current network is in the coverage enhancement mode, or may determine, based on quality of an uplink signal sent by the terminal device, measurement feedback information and an indication that are returned by the terminal device, and the like, whether the current network is in the coverage enhancement mode. A manner in which the network device determines that the current network is in the coverage enhancement mode is not limited in this application.

S302: The network device sends a first synchronization broadcast block SSB, where the first SSB indicates that the current network is in the coverage enhancement mode.

Correspondingly, the terminal device receives the first synchronization broadcast block SSB from the network device.

In an implementation, the first SSB includes master system block MIB information, and the MIB information indicates that the current network is in the coverage enhancement mode.

It should be noted that, the first SSB further includes a physical broadcast channel PBCH, and the PBCH is used to carry the MIB information. The network device may further indicate, by using a reserved bit with high reliability in the PBCH, that the current network is in the coverage enhancement mode. Therefore, how to specifically indicate that the current network is in the coverage enhancement mode is not specifically limited in this application.

In an implementation, the MIB information includes eight bits, four bits indicate configuration information of the first resource set, the remaining four bits indicate first configuration information, and the first configuration information is used to determine a search space of a downlink control channel of the first system information.

The configuration information of the first resource set includes a multiplexing mode between the first SSB and the first resource set, a quantity of physical resource blocks (physical resource block, PRB) occupied by the first resource set, a quantity of orthogonal frequency division multiplexing (orthogonal frequency division multiplexing, OFDM) symbols occupied by the first resource set, and an offset between a lower boundary of the first SSB and a lower boundary of the first resource set in frequency domain.

When the multiplexing mode between the first SSB and the first resource set is a first mode, the first configuration information includes a first index number, values of a parameter O and a parameter M, an index of the first OFDM symbol in the search space of the downlink control channel, and a quantity of search spaces of the downlink control channel in each slot; and the first index number is obtained based on binary-to-decimal conversion of the remaining four bits, the parameter O includes information about a start position of the first detection window of the first system information, and the parameter M includes information about a quantity of SSBs corresponding to one first resource set. It should be understood that the quantity of SSBs is a total quantity of the first SSB and retransmitted first SSBs; or

when the multiplexing mode between the first SSB and the first resource set is a second mode or a third mode, the first configuration information includes the index of the first OFDM symbol in the search space of the downlink control channel and position information of the first OFDM symbol.

Optionally, four most significant bits in the eight bits included in the MIB information indicate the configuration information of the first resource set, that is, respectively indicate the multiplexing mode between the first SSB and the first resource set, the quantity of physical resource blocks PRBs occupied by the first resource set, the quantity of orthogonal frequency division multiplexing OFDM symbols occupied by the first resource set, and the offset between the lower boundary of the first SSB and the lower boundary of the first resource set in frequency domain. Four least significant bits in the eight bits included in the MIB information indicate the first configuration information, that is, respectively indicate the values of the parameter O and the parameter M, the index of the first OFDM symbol in the search space of the downlink control channel, and the quantity of search spaces of the downlink control channel in each slot.

For example, the configuration information of the first resource set is configuration information of a first CORESETO, the first configuration information is configuration information of a type 0-PDCCH CSS, and the configuration information of the first CORESETO and the configuration information of the type 0-PDCCH CSS may be indicated by 8-bit information in total in the MIB information. The four most significant bits in the MIB information indicate the configuration information of the first CORESETO, and respectively include: a type of the multiplexing mode between the first SSB and the first CORESET0, the quantity of physical resource blocks PRBs occupied by the CORESET0, the quantity of orthogonal frequency division multiplexing OFDM symbols occupied by the first CORESET0, and the offset between the lower boundary of the first SSB and the lower boundary of the first CORESET0 in frequency domain. The four least significant bits in the MIB information indicate the configuration information of the type 0-PDCCH CSS, and respectively include: the values of the parameter O and the parameter M, the index of the first OFDM symbol in the CSS, and the quantity of CSSs in each slot.

It should be noted that, the values that are of the parameter O and the parameter M and that are indicated by the four least significant bits in the MIB information, and the quantity that is of CSSs in each slot and that is indicated by the four least significant bits in the MIB information are applicable only to the first mode in the multiplexing modes between the SSB and the CORESET0. In addition, the first index number in the configuration information of the type 0-PDCCH CSS is obtained based on binary-to-decimal conversion of the four bits. For example, when 4-bit binary corresponding to the four least significant bits is 0000, the corresponding first index number is 0; and when the 4-bit binary corresponding to the four least significant bits is 0001, the corresponding first index number is 1.

The following describes the multiplexing modes between the first SSB and the first CORESET0.

There are mainly three multiplexing modes between the first SSB and the first resource set. With reference to (a) in FIG. 2, a first frequency band and a second frequency band may be supported in the first mode, the first SSB and the first resource set are located on different symbols in time domain, a frequency domain range of the first resource set includes the first SSB, a position of a start resource block RB of the first resource set is lower than or equal to that of a frequency domain lower boundary resource block RB of the first SSB, the first frequency band is a frequency band less than 6 GHz, and the second frequency band is a frequency band greater than 6 GHz.

With reference to (b) in FIG. 2, in the second mode, the second frequency band may be supported, and two subcarrier combinations of the SSB and the CORESET0 are supported, which are respectively: < 120 kHz, 60 kHz> and <240 kHz, 120 kHz>. In addition, it is specified in the standard that in the second mode, the configuration information of the type 0-PDCCH CSS includes the index of the first OFDM symbol of the CSS.

With reference to (c) in FIG. 2, in the third mode, the second frequency band may be supported, and one subcarrier combination of the SSB and the CORESET0 is supported: < 120 kHz, 60 kHz>, and the first resource set occupies the first two symbols of the first SSB in time domain.

It should be noted that, for a multiplexing mode between the first SSB and the first CORESET0, refer to an existing multiplexing mode between the SSB and the CORESET0. Details are not described herein again.

In an implementation, the remaining four bits in the MIB information indicate the first configuration information, one bit in the remaining four bits indicates that the current network is in the coverage enhancement mode, and the remaining three bits in the remaining four bits indicate the corresponding first configuration information.

In an implementation, the method further includes: The network device sends a second SSB, where the second SSB is used to retransmit at least one of the following parameters of the first SSB: the MIB information, a primary synchronization signal PSS, and a secondary synchronization signal SSS.

The first SSB corresponds to the first resource set, and the second SSB corresponds to a second resource set; and both the first resource set and the second resource set are one of a plurality of optional resource sets, and the first resource set is the same as or different from the second resource set.

In an implementation, after that the network device determines that the current network is in the coverage enhancement mode, the method further includes: The network device determines the first SSB and a target resource; and the network device sends the first system information on the target resource. The first system information is one of a plurality of pieces of system information, the plurality of optional resource sets are in a one-to-one correspondence with the plurality of pieces of system information, and the target resource is a resource in one of the first resource set and the second resource set.

It should be noted that, after the network device determines the first SSB and the target resource, a sequence of sending the first SSB by the network device (that is, performing step S302) and sending the first system information by the network device is not specifically limited in this application.

Optionally, the first system information is a SIB1.

It should be noted that, the plurality of pieces of system information may be same system information, or may be different system information. This is not specifically limited in this application.

Optionally, that the plurality of optional resource sets are in a one-to-one correspondence with the plurality of pieces of system information may include but is not limited to the following correspondences:

When the plurality of pieces of system information are same system information, each of the plurality of optional resource sets corresponds to one piece of system information in the plurality of pieces of system information, or each of the plurality of optional resource sets corresponds to at least two pieces of system information in the plurality of pieces of system information.

For example, the plurality of optional resource sets include a CORESET0#1 and a CORESET0#2, and the plurality of pieces of system information include a SIB1#1, a SIB1#2, a SIB1#3, and a SIB1#4. The CORESET0#1 corresponds to the SIB1#1, and the CORESET0#2 corresponds to the SIB1#2; or the CORESET0#1 corresponds to the SIB1#1 and the SIB1#2, and the CORESET0#2 corresponds to the SIB1#3 and the SIB1#4.

When the plurality of pieces of system information are different system information, each of the plurality of optional resource sets corresponds to one piece of system information in the plurality of pieces of system information, or each of the plurality of optional resource sets corresponds to a plurality of pieces of system information of one type.

For another example, the plurality of optional resource sets include a CORESET0#1 and a CORESET0#2, and the plurality of pieces of system information include a SIB1#1 and a SIB1#2, where the SIB1#1 includes a SIB1#1-1 and a SIB1#1-2, and the SIB1#2 includes a SIB1#2-1 and a SIB1#2-2. The CORESET0#1 corresponds to one of the SIB1#1, and the CORESET0#2 corresponds to the other of the SIB1#1; or the CORESET0#1 corresponds to one of the SIB1#2, and the CORESET0#2 corresponds to the other of the SIB1#2; or the CORESET0#1 corresponds to the SIB1#1, and the CORESET0#2 corresponds to the SIB1#2.

In an implementation, when the multiplexing mode between the first SSB and the first resource set is the first mode, the MIB information includes at least one reserved bit, and one reserved bit in the at least one reserved bit indicates that the current network is in the coverage enhancement mode.

Optionally, the at least one reserved bit includes an index bit of the first SSB in the MIB information and a spare bit in the MIB information.

It should be noted that, the index bit of the first SSB included in the at least one reserved bit may be understood as follows: The index bit of the first SSB in the MIB information may usually indicate an SSB index, and becomes a reserved bit when the SSB index is not indicated.

Optionally, the at least one reserved bit in the MIB information indicates an index number of a target SSB corresponding to the target resource. It should be understood that, the target resource is a resource in one of the first resource set and the second resource set, and the target SSB is an SSB corresponding to a resource set in which the target resource is located. In addition, the index number of the target SSB is not necessarily a complete index number, and may be information related to the index number, for example, an index number mod2 or an index number mod4. This is not limited in this application.

In an implementation, when the multiplexing mode between the first SSB and the first resource set is the first mode, a part of first index numbers in the first configuration information indicate that the current network is in a coverage normal mode, and the other part of first index numbers in the first configuration information indicate that the current network is in the coverage enhancement mode.

It should be noted that, a part of first index numbers in the first configuration information may be a first half of first index numbers in the first configuration information, and the other part of first index numbers in the first configuration information may be a second half of first index numbers in the first configuration information. Alternatively, a part of first index numbers in the first configuration information and the other part of first index numbers in the first configuration information may be agreed upon through negotiation based on an actual requirement. Division of the first index numbers in the first configuration information is not specifically limited in this application.

In an implementation, when the multiplexing mode between the first SSB and the first resource set is the first mode and the first mode supports the second frequency band, the first configuration information includes at least one reserved index, and the at least one reserved index indicates that the current network is in the coverage enhancement mode. To be specific, when the multiplexing mode between the first SSB and the first resource set is the first mode and the first mode supports the second frequency band, in addition to the at least one reserved bit in the MIB information, the at least one reserved index included in the first configuration information may also indicate that the current network is in the coverage enhancement mode. This is not specifically limited in this application.

In an implementation, when the multiplexing mode between the first SSB and the first resource set is the second mode or the third mode, the first SSB is associated with the search space of the downlink control channel, and the first SSB and the search space of the downlink control channel are located in a same slot of a same radio frame.

Optionally, the first configuration information further includes at least one of the following: an index of the target SSB, a value of X1, and a value of X2, where X1=X2+1, X2 is a quantity of times of retransmission, X1 is a sum of a quantity of times of initial transmission and the quantity of times of retransmission, and the target SSB is an SSB corresponding to the target resource. To be specific, in this mode, the first configuration information specifically includes: the index of the first OFDM symbol in the search space of the downlink control channel, the position information of the first OFDM symbol, the index of the target SSB, and the value of X1.

It should be noted that, because X1 is the sum of one time of initial transmission and the quantity X2 of times of retransmission, the value of X1 included in the first configuration information may alternatively be changed to the value of X2. This is not specifically limited in this application.

S303: The terminal device determines the target resource of the first system information based on the first SSB.

In an implementation, the method further includes: The terminal device receives the second SSB from the network device, where the second SSB is used to retransmit at least one of the following parameters of the first SSB: the MIB information, the primary synchronization signal PSS, and the secondary synchronization signal SSS; the first SSB corresponds to the first resource set, and the second SSB corresponds to the second resource set; and both the first resource set and the second resource set are one of a plurality of optional resource sets, the first resource set is the same as or different from the second resource set.

In an implementation, that the terminal device determines the target resource of the first system information based on the first SSB includes:

The terminal device determines the target resource of the first system information based on the first SSB and/or the second SSB, where the first system information is one of a plurality of pieces of system information, the plurality of optional resource sets are in a one-to-one correspondence with the plurality of pieces of system information, and the target resource is a resource in one of the first resource set and the second resource set.

Optionally, the first system information is the SIB 1.

Therefore, the network device sends the first SSB or sends the first SSB and the second SSB in the network coverage enhancement mode, where the second SSB is used to retransmit information about the first SSB, and the network device further sends the first system information on the target resource. After receiving the first SSB, the terminal device determines the target resource based on the first SSB, or the terminal device receives the first SSB and the second SSB, and determines the target resource based on the first SSB and the second SSB. Further, the terminal device may determine time-frequency resources of the first system information based on the target resource, to further obtain the downlink control channel of the first system information. Finally, the terminal device accurately receives the first system information from the network device. In the method, a plurality of repeated SSBs can be transmitted, and a quantity of transmitted SIBls can be reduced, so that system overheads can be reduced.

S304: The terminal device receives the first system information from the network device based on the target resource.

Specifically, after determining the target resource of the first system information, the terminal device obtains physical downlink control channel information of the first system information. The physical downlink control channel information is used to schedule a physical downlink shared channel of the first system information. Therefore, the terminal device determines the physical downlink shared channel of the first system information based on the obtained downlink control channel information, to receive the first system information on the physical downlink shared channel.

It should be noted that, the target resource is usually used to carry the physical downlink control channel PDCCH, and the PDCCH is used to schedule the physical downlink shared channel PDSCH of the SIB1. Therefore, after determining the target resource of the first system information, the terminal device may obtain the PDCCH information, further determine the PDSCH based on the PDDCH, and finally receive the SIB1 on the PDSCH.

In conclusion, this application provides a communication method. The method includes: The network device determines that the current network is in the coverage enhancement mode; and then the network device determines the first SSB and the target resource. Further, the network device sends the first SSB, and further sends the first system information on the target resource, where the first SSB indicates that the current network is in the coverage enhancement mode, and the network device further sends the second SSB, where the second SSB is used to retransmit at least one parameter of the first SSB. After receiving the first SSB, the terminal device may determine that the current network is in the coverage enhancement mode, and may further receive the second SSB from the network device. Therefore, the terminal device may determine the target resource based on the first SSB and/or the second SSB, and further receive the first system information from the network device based on the target resource. Therefore, in the coverage enhancement scenario, by using the method, a plurality of repeated SSBs can be transmitted, that is, the network coverage enhancement mode is supported, and a quantity of transmitted SIB 1s can be reduced, so that system overheads are reduced.

Based on the communication method provided in the foregoing embodiment, this application further provides the following several specific embodiments for configuring the first resource set and the first configuration information in different multiplexing modes between the first SSB and the first resource set in the network coverage enhancement mode based on the method, to describe in detail the technical solutions of this application.

In this embodiment of this application, the first resource set is the CORESETO, and the first configuration information is the configuration information of the type 0-PDCCH CSS of the first system information SIB 1. Because the physical downlink control channel PDCCH of the SIB 1 is mapped to the type 0-PDCCH CSS, and in frequency domain, the type 0-PDCCH CSS is mapped to the CORESETO, it may be understood that the configuration of the CORESETO indicates frequency domain resource information of the SIB 1 PDCCH, and the configuration of the type 0-PDCCH CSS indicates time domain resource information of the SIB1 PDCCH.

In the NR standard, because there are three multiplexing modes between the SSB and the CORESETO, in different multiplexing modes, meanings of bits corresponding to the configuration information of the CORESETO and the configuration information of the type 0-PDCCH CSS are different, and configuration may be performed according to a plurality of tables in the standard.

**Embodiment 1**

In Embodiment 1, the multiplexing mode between the first SSB and the CORESET0 is the first mode in (a) in FIG. 2. The first mode may operate in a frequency band less than 6 GHz, that is, the first frequency band, represented by FR1. The first mode may also operate in a frequency band greater than 6 GHz, that is, the second frequency band, represented by FR2.

In the first mode, a type 0-PDCCH CSS of one SSB may be in a monitoring window including two slots, and a mapping relationship between an SSB index i and the first slot of the monitoring window corresponding to the SSB index i may meet the following formula 1:

$$n_0 = (O \cdot 2^{\mu} + \lfloor i \cdot M \rfloor) \bmod N_{slot}^{frame,\mu} \qquad \text{Formula 1}$$

where $\mu$ = 0,1,2,3,4, respectively representing that subcarrier spacings are 15 kHz, 30 kHz, 60 kHz, 120 kHz, and 240 kHz, $N_{slot}^{frame,\mu}$ represents a quantity of slots included in one radio frame in a corresponding subcarrier spacing, and $n_0$ represents an index of the first time slot of the type 0-PDCCH CSS monitoring window in one radio frame.

Using the first frequency band (FR1) in the first mode as an example, configuration information of the type 0-PDCCH CSS defined in the NR standard is shown in the following Table 1.

**Table 1**

| First index number (Index) | Parameter O | Quantity of CSSs in each slot (Number of search space sets per slot) | Parameter M | Index of the first OFDM symbol in the CSS (First symbol index) |
|---|---|---|---|---|
| 0 | 0 | 1 | 1 | 0 |
| 1 | 0 | 2 | 1/2 | {0, if $i$ is even}, { $N_{symb}^{CORESET}$ , if $i$ is odd} |
| 2 | 2 | 1 | 1 | 0 |
| 3 | 2 | 2 | 1/2 | {0, if $i$ is even}, { $N_{symb}^{CORESET}$ , if $i$ is odd} |
| 4 | 5 | 1 | 1 | 0 |
| 5 | 5 | 2 | 1/2 | {0, if $i$ is even}, { $N_{symb}^{CORESET}$ , if $i$ is odd} |
| 6 | 7 | 1 | 1 | 0 |
| 7 | 7 | 2 | 1/2 | {0, if $i$ is even}, { $N_{symb}^{CORESET}$ , if $i$ is odd} |
| 8 | 0 | 1 | 2 | 0 |
| 9 | 5 | 1 | 2 | 0 |
| 10 | 0 | 1 | 1 | 1 |
| 11 | 0 | 1 | 1 | 2 |
| 12 | 2 | 1 | 1 | 1 |
| 13 | 2 | 1 | 1 | 2 |
| 14 | 5 | 1 | 1 | 1 |
| 15 | 5 | 1 | 1 | 2 |

The parameter M in Table 1 indicates a degree of overlapping between monitoring windows of the SSBs whose first index numbers are i and i+1. When M=2, it indicates that the monitoring windows of the SSBs whose first index numbers are i and i+1 do not overlap at all. When M=1, it indicates that the monitoring windows of the SSBs whose first index numbers are i and i+1 overlap by one slot. When M=1/2, it indicates that the monitoring windows of the SSBs whose first index numbers are i and i+1 overlap completely. The parameter O indicates a start position of a monitoring window of the first SSB, so as to avoid a conflict between the type 0-PDCCH and the SSB. $N_{symb}^{CORESET}$ in Table 1 represents a quantity of symbols in a corresponding resource set.

Based on the communication method provided in this application shown in FIG. 3, in the method, when the current network is in the coverage enhancement mode, a plurality of repeated SSBs correspond to one resource set CORESETO, that is, only one SIB1 is sent when the plurality of repeated SSBs are sent. In the NR standard, a configuration of the CORESETO corresponding to each SSB may be implemented according to the foregoing formula 1 and based on the configuration information that is of the type 0-PDCCH CSS and that is indicated by Table 1. Therefore, in Embodiment 1, existing configuration information may be modified, so that only one SIB1 is sent when the plurality of repeated SSBs are sent.

The first frequency band (FR1) in the first mode is used as an example. The MIB information includes two bits as reserved bits, and the two reserved bits indicate an SSB index. Therefore, the network device may reuse one bit in the two reserved bits, to indicate a current network coverage mode, or may reuse a spare (namely, Spare) bit in the MIB information, to indicate a current network coverage mode. It should be noted that, the two bits included in the MIB information are usually SSB index bits, and indicate an SSB index in the second frequency band (FR2) of the first mode. In the first frequency band (FR1) of the first mode, the two bits do not indicate the SSB index, and are referred to as reserved bits.

It should be noted that, in this embodiment, the current network coverage mode may include a network coverage enhancement mode and a network coverage normal mode.

For example, the network device indicates the current network coverage mode by using one bit in the reserved bits of the SSB index. If a value corresponding to the one bit is 0, it indicates that the current network is in the coverage normal mode. If the value corresponding to the one bit is 1, it indicates that the current network is in the coverage enhancement mode.

If the current network is in the coverage normal mode, the network device may configure the type 0-PDCCH CSS according to Table 1; or if the current network is in the coverage enhancement mode, the network device may configure the type 0-PDCCH CSS according to Table 2.

**Table 2**

| First index number (Index) | Parameter O | Quantity of CSSs in each slot (Number of search space sets per slot) | Parameter M | Index of the first OFDM symbol in the CSS (First symbol index) |
|---|---|---|---|---|
| 0 | 0 | 1 | 1/2 | 0 |
| 1 | 2 | 1 | 1/2 | 0 |
| 2 | 5 | 1 | 1/2 | 0 |
| 3 | 7 | 1 | 1/2 | 0 |
| 4 | 0 | 1 | 1/4 | 0 |
| 5 | 2 | 1 | 1/4 | 0 |
| 6 | 5 | 1 | 1/4 | 0 |
| 7 | 7 | 1 | 1/4 | 0 |
| 8 | 0 | 1 | 1/8 | 0 |
| 9 | 2 | 1 | 1/8 | 0 |
| 10 | 5 | 1 | 1/8 | 0 |
| 11 | 7 | 1 | 1/8 | 0 |
| 12 | Reserved | | | |
| 13 | Reserved | | | |
| 14 | Reserved | | | |
| 15 | Reserved | | | |

In Table 2, a definition of the parameter M is different from a definition of the parameter M in the NR standard. To be specific, with reference to Table 1, the parameter M in the NR standard may control the degree of overlapping between the monitoring windows of the SSB_i and the SSB_i+1, and the parameter M in Table 2 indicates a degree of overlapping between monitoring windows of the SSB_i to the SSB_(i+1/M-1). For example, when the first index number is 4, and M=1/4, it indicates that four SSBs correspond to a same monitoring window.

It should be noted that values of the parameters in Table 2 are merely used as an example. Therefore, specific values of the parameters in Table 2 are not limited to the values shown in Table 2 in this application, and may alternatively be other values.

In addition, the remaining two reserved bits may also be reused to expand Table 2, to increase flexibility of configuring the type 0-PDCCH CSS.

When the first mode operates in the second frequency band (FR2), because in the NR standard, the configuration table corresponding to the type 0-PDCCH CSS includes two reserved first indexes, for example, the first index number 14 and the first index number 15, in the second frequency band, the two reserved first indexes may also directly indicate the current network coverage mode and the corresponding configuration information, and the bits in the MIB information do not need to be reused. In addition, in the second frequency band, the type 0-PDCCH CSS configuration table in the existing NR standard may be modified with reference to the manner of the first frequency band. Details are not described herein.

It should be noted that, the type 0-PDCCH CSS configuration table corresponding to the second frequency band (FR2) in the first mode between the SSB and the CORESETO is defined in the existing NR standard, and is not shown in detail in this embodiment.

**Embodiment 2**

In Embodiment 2, the multiplexing mode between the first SSB and the CORESETO is the first mode in (a) in FIG. 2. If the network device determines that the current network is in the coverage enhancement mode, the type 0-PDCCH CSS may be further configured with reference to the following Table 3.

In Embodiment 2, the network device does not reuse two bits included in the MIB information as reserved bits (index bits of the SSB) to indicate the current network coverage mode, but redefines the type 0-PDCCH CSS configuration table according to Table 1 in the NR standard, that is, deletes some configuration information in the existing type 0-PDCCH CSS configuration table in Table 1. Specifically, the type 0-PDCCH CSS configuration information is shown in Table 3.

**Table 3**

| First index number (Index) | Parameter O | Quantity of CSSs in each slot (Number of search space sets per slot) | Parameter M | Index of the first OFDM symbol in the CSS (First symbol index) |
|---|---|---|---|---|
| 0 | 0 | 1 | 1 | 0 |
| 1 | 2 | 1 | 1 | 0 |
| 2 | 5 | 1 | 1 | 0 |
| 3 | 7 | 1 | 1 | 0 |
| 4 | 0 | 1 | 2 | 0 |
| 5 | 0 | 1 | 1 | 1 |
| 6 | 2 | 1 | 1 | 1 |
| 7 | 5 | 1 | 1 | 1 |
| 8 | 0 | 1 | 1/2 | 0 |
| 9 | 2 | 1 | 1/2 | 0 |
| 10 | 5 | 1 | 1/2 | 0 |
| 11 | 7 | 1 | 1/2 | 0 |
| 12 | 0 | 1 | 1/4 | 0 |
| 13 | 2 | 1 | 1/4 | 0 |

(continued)

| First index number (Index) | Parameter O | Quantity of CSSs in each slot (Number of search space sets per slot) | Parameter M | Index of the first OFDM symbol in the CSS (First symbol index) |
|---|---|---|---|---|
| 14 | 5 | 1 | 1/4 | 0 |
| 15 | 7 | 1 | 1/4 | 0 |

It should be noted that, values of the parameters in Table 3 are merely used as an example. Therefore, specific values of the parameters in Table 3 are not limited to the values shown in Table 3 in this application, and may alternatively be other values.

In Table 3, the first index numbers 0 to 7 indicate that the current network is in the coverage normal mode, and correspond to configuration information of the type 0-PDCCH CSS in the network coverage normal mode; and the first index numbers 8 to 15 indicate that the current network is in the coverage enhancement mode, and correspond to configuration information of the type 0-PDCCH CSS in the network coverage enhancement mode. Because the four least significant bits in the MIB information indicate the configuration information of the type 0-PDCCH CSS, the highest bit in the four bits may indicate the current network coverage mode, and the three least significant bits in the four bits may indicate configuration information of the type 0-PDCCH CSS corresponding to different network coverage modes. Specifically, each of the three least significant bits indicates one piece of information. Therefore, the three bits may be converted into eight indexes. To be specific, the eight indexes respectively indicate eight types of configuration information.

It should be noted that, in the case of the FR1 in the first mode between the SSB and the CORESET0, the type 0-PDCCH CSS configuration table is not redesigned, but a method similar to that in Embodiment 2 is used to reuse the spare bit (that is, a Spare bit) in the MIB information and the two reserved bits in the SSB index, that is, a total of three bits, to indicate a target SSB index that corresponds to the CORESET0 and that is in the repeated SSBs. In the case of the FR1, one SSB set includes a maximum of eight SSBs. Therefore, the three bits may indicate all SSB indexes.

In addition, in the case of the FR2 in the first mode between the SSB and the CORESET0, because there is no reserved bit in the SSB index in the MIB information, and there is only one reserved bit of the spare (that is, Spare) bit, this is applicable to a case in which the SSB is repeated for a maximum of twice. For example, when Spare=0, it indicates that the current network is in the coverage normal mode; or when Spare=1, it indicates that the current network is in the coverage enhancement mode. In the coverage enhancement mode, the SSB is constantly repeated twice, and an SSB corresponding to the CORESET0 is an SSB whose index is an even/odd number. Therefore, the network device sends the PDCCH of the SIB 1 on the CORESET0 configured only corresponding to the SSB, and the terminal device detects the PDCCH only at a corresponding position.

**Embodiment 3**

In Embodiment 3, the multiplexing mode between the first SSB and the CORESET0 is the second mode in (b) in FIG. 2 or the third mode in (c) in FIG. 2, and the second mode and the third mode are only applicable to a frequency band (FR2) greater than 6 GHz. Using the second mode as an example, the second mode may support two subcarrier combinations of the SSB and the CORESET0, which are respectively < 120 kHz, 60 kHz> and <240 kHz, 120 kHz>. One SSB set includes 64 SSBs. The following uses the subcarrier combination of < 120 kHz, 60 kHz> as an example. The first SSB and the type 0-PDCCH CSS associated with the first SSB are located in a same slot of a same radio frame. In addition, when the SSB index is i=4k, i=4k+1, i=4k+2, and i=4k+3, indexes of the first OFDM symbol of the type 0-PDCCH CSS are 0, 1, 6, and 7 respectively. For the configuration information of the type 0-PDCCH CSS, refer to Table 4. However, actually, there is only one configuration in Table 4, and first index numbers 1 to 15 are reserved indexes.

**Table 4**

| First index number (Index) | PDCCH monitoring scenario (PDCCH monitoring occasions (SFN and slot number)) | Index of the first OFDM symbol in the CSS (First symbol index) (k=0, 1, ..., 15) |
|---|---|---|
| 0 | $SFN_C = SFN_{SSB,i}$ <br> $n_C = n_{SSB,i}$ | 0, 1, 6, 7 for $i = 4k$, $i = 4k + 1$, $i = 4k + 2$, and $i = 4k + 3$ |
| 1 | Reserved | |

(continued)

| First index number (Index) | PDCCH monitoring scenario (PDCCH monitoring occasions (SFN and slot number)) | Index of the first OFDM symbol in the CSS (First symbol index) (k=0, 1, ..., 15) |
|---|---|---|
| 2 | Reserved | |
| 3 | Reserved | |
| 4 | Reserved | |
| 5 | Reserved | |
| 6 | Reserved | |
| 7 | Reserved | |
| 8 | Reserved | |
| 9 | Reserved | |
| 10 | Reserved | |
| 11 | Reserved | |
| 12 | Reserved | |
| 13 | Reserved | |
| 14 | Reserved | |
| 15 | Reserved | |

It should be noted that, the foregoing Table 4 is a configuration table defined in the existing NR standard. To be specific, when the current network is in the coverage normal mode, configuration is performed according to the configuration information corresponding to the first index number 0 in Table 4. The first index numbers 1 to 15 are reserved indexes. The SFN represents a system frame number.

Based on the solution of this application in FIG. 3 that a plurality of repeated SSBs correspond to one CORESETO, a configuration of the type 0-PDCCH CSS of the CORESETO may be bound to one of the plurality of repeated SSBs (that is, an SSB_m to an SSB_n). For example, the configuration of the type 0-PDCCH CSS of the CORESETO is bound to an SSB_k, the SSB_k is one of the SSB_m to the SSB_n, and the SSB_m to the SSB_n all indicate index-related information of the SSB_k in the configuration of the type 0-PDCCH CSS, where the SSB_k is denoted as a Target_SSB_index target SSB, where Target_SSB_index=SSB index mod (a quantity of times of SSB repetition), that is, indicate an index of the target SSB in the repeated SSBs. After the target SSB is determined, a position of the first OFDM symbol of the corresponding type 0-PDCCH CSS can be found according to a default rule in the first indexes in Table 5.

It should be noted that, the index-related information of the SSB_k may be an SSB index, or may be information obtained by compressing the SSB index. For example, in the first frequency band (FR1) in the second mode, there are a maximum of eight SSB indexes, and three bits can indicate any SSB index. However, in the second frequency band (FR2) in the second mode, there are a maximum of 64 SSB indexes, and three bits cannot indicate any complete SSB index. In this case, the SSB index may be compressed. It is assumed that a quantity of times of SSB repetition is 8, that is, 0 to 7 are same SSBs, and 8 to 15 are same SSBs. Therefore, in the eight same SSBs, only a target SSB needs to be determined. In this way, the SSB index-related information is (SSB index mod 8). In other words, the SSB index is compressed.

When a plurality of SSBs are combined, information in corresponding PBCHs needs to be the same. In this scenario, there are 64 SSBs in one SSB set, and the SSB index has a total of six bits. The three most significant bits are indicated by SSB index bits in the MIB information, and the three least significant bits are carried by a demodulation reference signal (demodulation reference signal, DMRS). A maximum of eight SSBs can be combined. Therefore, the type 0-PDCCH CSS configuration table may be redesigned by using reserved indexes for the subcarrier combination < 120 kHz, 60 kHz> in the second mode. For details, refer to Table 5. $i$ is the SSB index, and $i'$ represents the index of the target SSB.

**Table 5**

| First index number (Index) | PDCCH monitoring scenario (PDCCH monitoring occasions (SFN and slot number)) | Index of the first OFDM symbol in the CSS (First symbol index) (k=0, 1, ..., 15) |
|---|---|---|
| 0 | $SFN_C = SFN_{SSB,i}$<br>$n_C = n_{SSB,i}$ | 0, 1, 6, 7 for $i = 4k$, $i = 4k + 1$, $i = 4k + 2$, and $i = 4k + 3$ |
| 1 | $SFN_c = SFN_{SSB,i'}$, $n_c = n_{SSB,i'}$<br>$i' = i - (i\ mod\ 2)$ | $\begin{cases} 0, \text{if } i' = 4k \\ 6, \text{if } i' = 4k + 2 \end{cases}$ |
| 2 | $SFN_c = SFN_{SSB,i'}$, $n_c = n_{SSB,i'}$<br>$i' = i - (i\ mod\ 2) + 1$ | $\begin{cases} 1, \text{if } i' = 4k + 1 \\ 7, \text{if } i' = 4k + 3 \end{cases}$ |
| 3 | $SFN_c = SFN_{SSB,i'}$, $n_c = n_{SSB,i'}$<br>$i' = i - (i\ mod\ 4)$ | 0 |
| 4 | $SFN_c = SFN_{SSB,i'}$, $n_c = n_{SSB,i'}$<br>$i' = i - (i\ mod\ 4) + 1$ | 1 |
| 5 | $SFN_c = SFN_{SSB,i'}$, $n_c = n_{SSB,i'}$<br>$i' = i - (i\ mod\ 4) + 2$ | 6 |
| 6 | $SFN_c = SFN_{SSB,i'}$, $n_c = n_{SSB,i'}$<br>$i' = i - (i\ mod\ 4) + 3$ | 7 |
| 7 | $SFN_c = SFN_{SSB,i'}$, $n_c = n_{SSB,i'}$<br>$i' = i - (i\ mod\ 8)$ | 0 |
| 8 | $SFN_c = SFN_{SSB,i'}$, $n_c = n_{SSB,i'}$<br>$i' = i - (i\ mod\ 8) + 1$ | 1 |
| 9 | $SFN_c = SFN_{SSB,i'}$, $n_c = nss_{B,c'}$<br>$i' = i - (i\ mod\ 8) + 2$ | 6 |
| 10 | $SFN_c = SFN_{SSB,i'}$, $n_c = n_{SSB,i'}$<br>$i' = i - (i\ mod\ 8) + 3$ | 7 |
| 11 | $SFN_c = SFN_{SSB,i'}$, $n_c = n_{SSB,i'}$<br>$i' = i - (i\ mod\ 8) + 4$ | 0 |
| 12 | $SFN_c = SFN_{SSB,i'}$, $n_c = n_{SSB,i'}$<br>$i' = i - (i\ mod\ 8) + 5$ | 1 |
| 13 | $SFN_c = SFN_{SSB,i'}$, $n_c = n_{SSB,i'}$<br>$i' = i - (i\ mod\ 8) + 6$ | 6 |
| 14 | $SFN_c = SFN_{SSB,i'}$, $n_c = n_{SSB,i'}$<br>$i' = i - (i\ mod\ 8) + 7$ | 7 |
| 15 | Reserved | |

In Embodiment 3, a rule for redesigning the type 0-PDCCH CSS configuration table is as follows:

If the quantity of times of SSB repetitions is N_repeat, the first indexes are mN_repeat to (m+1)·N_repeat-1, which are a group of repeated SSBs. One of the repeated SSBs is selected as the target SSB, and configurations of the CORESET0 and the type 0-PDCCH CSS that correspond to the target SSB are target configuration information. The quantity N_repeat of times of repetition may be flexibly selected, for example, may be 2, 4, or 8.

It should be noted that, when the first index in Table 5 is 1, the corresponding quantity of times of SSB repetition is 2, and the target SSB is an SSB whose index is an even number in the two repeated SSBs. However, actually, the SSB may be repeated for four times or even more times. In this case, one SIB1 is sent every two SSBs, and SIB1 combination is supported. This is applicable when both the SSBs and SIB1s need to be combined, but a quantity of times for which the SIBIs need to be combined is less than that of the SSBs.

Based on the design in which the multiplexing mode between the first SSB and the CORESET0 is the subcarrier combination mode of <240 kHz, 120 kHz> in the second mode in (b) in FIG. 2, a similar design may also be made when the multiplexing mode between the first SSB and the CORESET0 is the third mode in (c) in FIG. 2. Details are not described herein again.

**Embodiment 4**

This embodiment provides a broadcast signal design method applicable to the multiplexing mode 2 and the multiplexing mode 3 of the SSB and the CORESET0. A difference from Embodiment 3 lies in that, similar to Embodiment 2, in this embodiment, one of the four bits in the type 0-PDCCH CSS configuration indication is used, to indicate whether the network is in the coverage enhancement mode, for example, the highest bit indicates whether the network is in the coverage enhancement mode, and the three least significant bits indicate configuration parameters in different modes. Table 6 shows a type 0-PDCCH CSS configuration (120 kHz, 60 kHz) in the multiplexing mode 2 between the SSB and the CORESET0.

**Table 6**

| First index number (Index) | PDCCH monitoring scenario (PDCCH monitoring occasions (SFN and slot number)) | Index of the first OFDM symbol in the CSS (First symbol index) (k=0, 1, ..., 15) |
|---|---|---|
| 0 | $SFN_C = SFN_{SSB,i}$ | 0, 1, 6, 7 for |
| | $n_C = n_{SSB,i}$ | $i=4k, i = 4k + 1, i = 4k + 2$, and $i = 4k + 3$ |
| 1 | Reserved | |
| 2 | Reserved | |
| 3 | Reserved | |
| 4 | Reserved | |
| 5 | Reserved | |
| 6 | Reserved | |
| 7 | Reserved | |
| 8 | $SFN_c = SFN_{SSB,i'}, n_c = n_{SSB,i'}$ $i' = i - (i \bmod 2)$ | $\begin{cases} 0, \text{if } i' = 4k \\ 6, \text{if } i' = 4k + 2 \end{cases}$ |
| 9 | $SFN_c = SFN_{SSB,i'}, n_c = n_{SSB,i'}$ $i' = i - (i \bmod 2) + 1$ | $\begin{cases} 1, \text{if } i' = 4k + 1 \\ 7, \text{if } i' = 4k + 3 \end{cases}$ |
| 10 | $SFN_c = SFN_{SSB,i'}, n_c = n_{SSB,i'}$ m $i' = i - (i \bmod 4)$ | 0 |
| 11 | $SFN_c = SFN_{SSB,i'}, n_c = n_{SSB,i'}$ $i' = i - (i \bmod 4) + 1$ | 1 |
| 12 | $SFN_c = SFN_{SSB,i'}, n_c = n_{SSB,i'}$ $i' = i - (i \bmod 4) + 2$ | 6 |
| 13 | $SFN_c = SFN_{SSB,i'}, n_c = n_{SSB,i'}$ $i' = i - (i \bmod 4) + 3$ | 7 |
| 14 | $SFN_c = SFN_{SSB,i'}, n_c = n_{SSB,i'}$ $i' = i - (i \bmod 8)$ | 0 |
| 15 | $SFN_c = SFN_{SSB,i'}, n_c = n_{SSB,i'}$ $i' = i - (i \bmod 8) + 1$ | 1 |

In conclusion, when the current network is in the coverage enhancement mode, the type 0-PDCCH CSS configuration table may be flexibly redesigned based on the foregoing embodiments, so that the network device sends the PDCCH and the PDSCH of the SIB1 at a corresponding time-frequency position. After receiving the MIB information from the network device, the terminal device can accurately detect the PDCCH and the PDSCH of the SIB1 information based on the MIB information, and finally can accurately obtain the SIB1 information, to implement synchronous communication with the network device.

Therefore, in the solution of this application, the network can be supported in sending a plurality of repeated SSBs, and a quantity of pieces of transmitted SIB1 information can be reduced, so that system overheads can be reduced.

The following describes communication apparatuses provided in embodiments of this application.

Based on a same technical concept, an embodiment of this application provides a communication apparatus. The apparatus may be used in the network device in the method of this application. To be specific, the apparatus includes modules or units in one-to-one correspondence with the methods/operations/steps/actions described for the network device in the foregoing embodiments. The module or unit may be a hardware circuit, may be software, or may be implemented by a hardware circuit in combination with software. The communication apparatus has a structure shown in FIG. 4.

As shown in FIG. 4, the communication apparatus 400 may include a processing module 401. The processing module 401 is equivalent to a processing unit, and may be configured to perform a data processing and/or beam indication configuration process.

Optionally, the communication apparatus 400 further includes a transceiver module 402, and the transceiver module 402 may implement a corresponding communication function. Specifically, the transceiver module 402 may specifically include a receiving module and/or a sending module. The receiving module may be configured to receive information and/or data, and the like, and the sending module may be configured to send information and/or data. The transceiver unit may also be referred to as a communication interface or a transceiver unit.

Optionally, the communication apparatus 400 may further include a storage module 403. The storage module 403 is equivalent to a storage unit, and may be configured to store instructions and/or data. The processing module 401 may read the instructions and/or the data in the storage module, so that the communication apparatus implements the foregoing method embodiments.

The communication apparatus module 400 may be configured to perform actions performed by the network device in the foregoing method embodiments. The communication apparatus 400 may be a network device or a component that can be configured in a network device. The transceiver module 402 is configured to perform a sending-related operation on the network device side in the foregoing method embodiments, and the processing module 401 is configured to perform a processing-related operation on the network device side in the foregoing method embodiments.

Optionally, the transceiver module 402 may include a sending module and a receiving module. The sending module is configured to perform a sending operation in the foregoing method embodiments. The receiving module is configured to perform a receiving operation in the foregoing method embodiments.

It should be noted that, the communication apparatus 400 may include the sending module, but does not include the receiving module. Alternatively, the communication apparatus 400 may include the receiving module, but does not include the sending module. This may specifically depend on whether the foregoing solution performed by the communication apparatus 400 includes a sending action and a receiving action.

In an example, the communication apparatus 400 is configured to perform actions performed by the network device in the embodiment shown in FIG. 3.

For example, the transceiver module 402 is configured to obtain information about an uplink channel of a terminal device. The transceiver module 402 is further configured to send first information to the terminal device, where the first information indicates an uplink precoding indication manner.

The processing module 401 is configured to determine that a current network is in a coverage enhancement mode.

It should be understood that a specific process in which the modules perform the foregoing corresponding processes has been described in detail in the foregoing method embodiments. For brevity, details are not described herein again.

The processing module 401 in the foregoing embodiment may be implemented by at least one processor or a processor-related circuit. The transceiver module 402 may be implemented by a transceiver or a transceiver-related circuit. The storage unit may be implemented by at least one memory.

Based on a same technical concept, an embodiment of this application provides a communication apparatus. The apparatus may be used in the terminal device in the method of this application. To be specific, the apparatus includes modules or units in one-to-one correspondence with the methods/operations/steps/actions described for the terminal device in the foregoing embodiments. The module or unit may be a hardware circuit, may be software, or may be implemented by a hardware circuit in combination with software. The communication apparatus may also have a structure shown in FIG. 4.

As shown in FIG. 4, the communication apparatus 400 may include a processing module 401. The processing module 401 is equivalent to a processing unit, and may be configured to perform a data processing and/or uplink precoding determining process.

Optionally, the communication apparatus 400 further includes a transceiver module 402, and the transceiver module 402 may implement a corresponding communication function. Specifically, the transceiver module 402 may specifically include a receiving module and/or a sending module. The receiving module may be configured to receive information and/or data, and the like, and the sending module may be configured to send information and/or data. The transceiver unit may also be referred to as a communication interface or a transceiver unit.

Optionally, the communication apparatus 400 may further include a storage module 403. The storage module 403 is equivalent to a storage unit, and may be configured to store instructions and/or data. The processing module 401 may read the instructions and/or the data in the storage module, so that the communication apparatus implements the foregoing method embodiments.

The communication apparatus module 400 may be configured to perform actions performed by the terminal device in the foregoing method embodiments. The communication apparatus 400 may be a terminal device or a component that can be configured in a terminal device. The transceiver module 402 is configured to perform a receiving-related operation on the terminal device side in the foregoing method embodiments, and the processing module 401 is configured to perform a processing-related operation on the terminal device side in the foregoing method embodiments.

Optionally, the transceiver module 402 may include a sending module and a receiving module. The sending module is configured to perform a sending operation in the foregoing method embodiments. The receiving module is configured to perform a receiving operation in the foregoing method embodiments.

It should be noted that, the communication apparatus 400 may include the sending module, but does not include the receiving module. Alternatively, the communication apparatus 400 may include the receiving module, but does not include the sending module. This may specifically depend on whether the foregoing solution performed by the communication apparatus 400 includes a sending action and a receiving action.

In an example, the communication apparatus 400 is configured to perform actions performed by the terminal device in the embodiment shown in FIG. 3.

For example, the transceiver module 402 is configured to receive a first SSB from the network device, where the first SSB indicates that a current network is in a coverage enhancement mode.

The processing module 401 is configured to determine a target resource of first system information based on the first SSB. The processing module 401 is further configured to receive the first system information from the network device by using the transceiver module 402 based on the target resource.

It should be understood that a specific process in which the modules perform the foregoing corresponding processes has been described in detail in the foregoing method embodiments. For brevity, details are not described herein again.

The processing module 401 in the foregoing embodiment may be implemented by at least one processor or a processor-related circuit. The transceiver module 402 may be implemented by a transceiver or a transceiver-related circuit. The storage unit may be implemented by at least one memory.

This application further provides a communication apparatus. The communication apparatus may be a network device, a processor of the network device, or a chip. The communication apparatus may be configured to perform operations performed by the network device in the foregoing method embodiments. The communication apparatus may alternatively be a terminal device, a processor of the terminal device, or a chip. The communication apparatus may be configured to perform operations performed by the terminal device in the foregoing method embodiments.

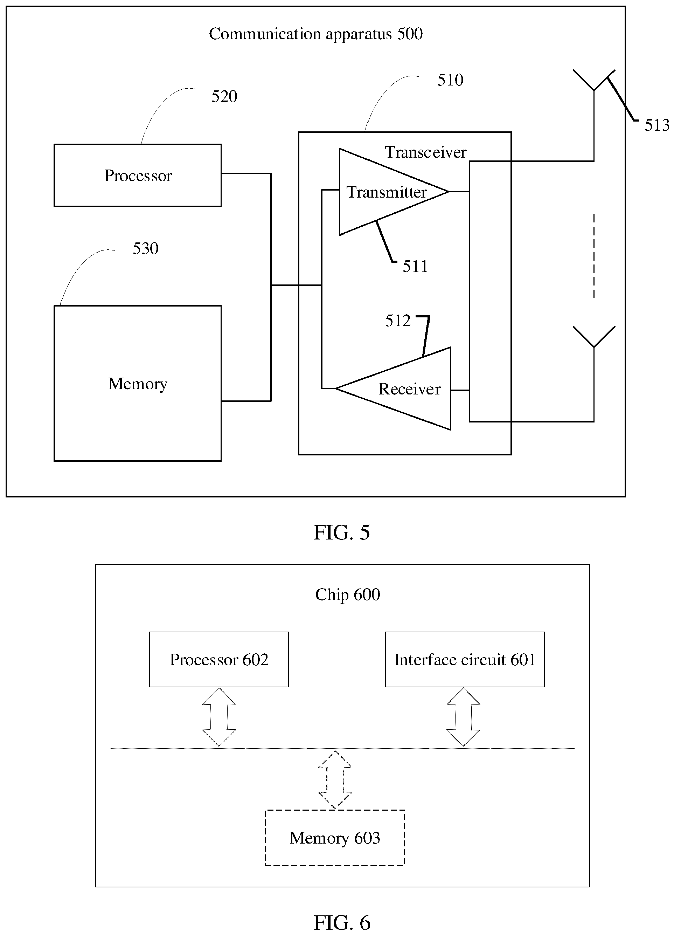

When the communication apparatus is the network device, for example, the communication apparatus is a base station. FIG. 5 is a simplified schematic diagram of a structure of a network device. As shown in FIG. 5, a RAN device includes a transceiver 510, a processor 520, and a memory 530. The transceiver 510 includes a transmitter 511, a receiver 512, a radio frequency circuit (not shown in the figure), an antenna 513, and an input/output apparatus (not shown in the figure). The memory 530 may store computer program code.

The processor 520 is mainly configured to: process a communication protocol and communication data, control the RAN device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna 513 is mainly configured to receive and send a radio frequency signal in a form of an electromagnetic wave. The input/output apparatus, for example, a touchscreen, a display screen, or a keyboard, is mainly configured to: receive data input by a user and output data to the user. It should be noted that, terminal devices of some types may not have the input/output apparatus.

When data needs to be sent, the processor 520 performs baseband processing on the to-be-sent data and then outputs a baseband signal to the radio frequency circuit. The radio frequency circuit performs radio frequency processing on the baseband signal and then sends a radio frequency signal to the outside in the electromagnetic wave form through the antenna. When data is sent to the terminal device, the radio frequency circuit receives a radio frequency signal through the antenna, converts the radio frequency signal into a baseband signal, and outputs the baseband signal to the processor. The processor 520 converts the baseband signal into data, and processes the data. For ease of description, FIG. 5 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have a transceiver function may be considered as a transceiver unit (a transceiver module) of the terminal device, and the processor that has a processing function may be considered as a processing unit (a processing module) of the terminal device.

As shown in FIG. 5, the network device includes the transceiver 510, the processor 520, and the memory 530. The transceiver 510 may also be referred to as a transceiver unit, a transceiver machine, a transceiver apparatus, or the like. The processor 520 may also be referred to as a processing unit, a processing board, a processing module, a processing apparatus, or the like.

Optionally, a component that is in the transceiver 510 and that is configured to implement a receiving function may be considered as a receiving module, and a component that is in the transceiver 510 and that is configured to implement a sending function may be considered as a sending unit or a sending module. In other words, the transceiver 510 includes a transmitter 511 and a receiver 512. The transceiver 510 may also be sometimes referred to as a transceiver machine, a transceiver module, a transceiver circuit, or the like. The transmitter 511 may also be sometimes referred to as a transmitter machine, a transmit module, a transmit circuit, or the like. The receiver 512 may also be sometimes referred to as a receiver machine, a receiving module, a receiver circuit, or the like.

For example, in an implementation, the processor 520 is configured to perform a processing action on the network device side in the embodiment shown in FIG. 3, and the transceiver 510 is configured to perform a transceiver action on the network device side in FIG. 3. For example, the transceiver 510 is configured to perform the operation of S301 or S304 in the embodiment shown in FIG. 3, and the operation may be specifically sending a first SSB and sending first system information. The processor 520 is configured to perform the processing operation of S301 in the embodiment shown in FIG. 3, and the processing operation may be specifically determining that a current network is in a coverage enhancement mode.

It should be understood that, FIG. 5 is merely an example rather than a limitation, and the foregoing network device including the transceiver module and the processing module may not depend on the structure shown in FIG. 5.

When the communication apparatus is a chip, FIG. 6 is a simplified schematic diagram of a structure of a chip. The chip includes an interface circuit 601 and a processor 602. The interface circuit 601 and the processor 602 are coupled to each other. It may be understood that the interface circuit 601 may be a transceiver or an input/output interface, and the processor may be a processing module, a microprocessor, or an integrated circuit integrated on the chip. The sending operation of the network device in the foregoing method embodiments may be understood as an output of the chip, and the receiving operation of the network device in the foregoing method embodiments may be understood as an input of the chip.

Optionally, the chip 600 may further include a memory 603, configured to: store instructions executed by the processor 602, store input data required by the processor 602 to run instructions, or store data generated after the processor 602 runs the instructions. Optionally, the memory 603 may be further integrated with the processor 602.

When the communication apparatus is the terminal device, FIG. 5 is a simplified schematic diagram of a structure of the terminal device. The terminal device includes a transceiver 510, a processor 520, and a memory 530. The processor 520 is mainly configured to: perform baseband processing, control the terminal device, and the like. The processor 520 is usually a control center of a base station, may be usually referred to as a processor, and is configured to control the network device to perform a processing operation on the network device side in the foregoing method embodiments. The memory 530 is mainly configured to store computer program code and data. The transceiver 510 is mainly configured to receive and send a radio frequency signal and perform conversion between the radio frequency signal and a baseband signal. The transceiver 510 may be generally referred to as a transceiver module, a transceiver machine, a transceiver circuit, a transceiver, or the like. A transceiver module of the transceiver 510 may also be referred to as a transceiver machine, a transceiver, or the like, and includes an antenna 513 and a radio frequency circuit (not shown in the figure). The radio frequency circuit is mainly configured to perform radio frequency processing. Optionally, a component that is in the transceiver 510 and that is configured to implement a receiving function may be considered as a receiver, and a component that is in the transceiver 510 and that is configured to implement a sending function may be considered as a transmitter. In other words, the transceiver 510 includes a transmitter 511 and a receiver 512. The receiver may also be referred to as a receiving module, a receiver machine, a receiver circuit, or the like, and the transmitter may be referred to as a transmit module, a transmitter machine, a transmitter circuit, or the like.

The transceiver 510 and the memory 530 may include one or more boards, and each board may include one or more processors and one or more memories. The processor is configured to read and execute a program in the memory, to implement a baseband processing function and control the base station. If there are a plurality of boards, the boards may be interconnected with each other, to enhance a processing capability. In an optional implementation, alternatively, a plurality of boards may share one or more processors, a plurality of boards share one or more memories, or a plurality of boards share one or more processors at the same time.

For example, in an implementation, the transceiver module of the transceiver 510 is configured to perform a transceiving-related process performed by the terminal device in the embodiment shown in FIG. 3. The processor of the processor 520 is configured to perform a processing-related process performed by the terminal device in the embodiment shown in FIG. 3.

It should be understood that, FIG. 5 is merely an example rather than a limitation, and the foregoing terminal device including the processor, the memory, and the transceiver may not depend on the structure shown in FIG. 5.

When the communication apparatus is a chip, FIG. 6 is a simplified schematic diagram of a structure of a chip. The chip includes an interface circuit 601 and a processor 602. The interface circuit 601 and the processor 602 are coupled to each other. It may be understood that the interface circuit 601 may be a transceiver or an input/output interface, and the processor may be a processing module, a microprocessor, or an integrated circuit integrated on the chip. The sending operation of the terminal device in the foregoing method embodiments may be understood as an output of the chip, and the receiving operation of the terminal device in the foregoing method embodiments may be understood as an input of the chip.

Optionally, the chip 600 may further include a memory 603, configured to: store instructions executed by the processor 602, store input data required by the processor 602 to run instructions, or store data generated after the processor 602 runs the instructions. Optionally, the memory 603 may be further integrated with the processor 602.

An embodiment of this application further provides a computer-readable storage medium, storing computer instructions used to implement the method performed by the terminal device in the foregoing method embodiments.

For example, when the computer program is executed by a computer, the computer is enabled to implement the method performed by the terminal device in the foregoing method embodiments.

An embodiment of this application further provides a computer program product including instructions. When the instructions are executed by a computer, the computer is enabled to implement the method performed by the terminal device in the foregoing method embodiments.

An embodiment of this application further provides a communication system. The communication system includes the terminal device and the network device in the foregoing embodiments.

An embodiment of this application further provides a chip apparatus, including a processor, configured to invoke a computer program or a computer instruction stored in a memory, so that the processor performs the communication method shown in FIG. 3.

In a possible implementation, an input of the chip apparatus corresponds to the receiving operation in the embodiment shown in FIG. 3, and an output of the chip apparatus corresponds to the sending operation in the embodiment shown in FIG. 3.

Optionally, the processor is coupled to the memory through an interface.

Optionally, the chip apparatus further includes a memory, and the memory stores a computer program or a computer instruction.

Any processor mentioned above may be a general-purpose central processing unit, a microprocessor, an application-specific integrated circuit (application-specific integrated circuit, ASIC), or one or more integrated circuits configured to control program execution of the communication method shown in FIG. 3. Any memory mentioned above may be a read-only memory (read-only memory, ROM), another type of static storage device that can store static information and instructions, a random access memory (random access memory, RAM), or the like.

It should be noted that, for ease and brevity of description, for explanations and beneficial effect of related content in any one of the communication apparatuses provided above, refer to the corresponding method embodiments provided above. Details are not described herein again.

The network device or the terminal device in this application may include a hardware layer, an operating system layer running above the hardware layer, and an application layer running above the operating system layer. The hardware layer may include hardware such as a central processing unit (central processing unit, CPU), a memory management module (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

Division into modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

Through descriptions of the foregoing implementations, a person skilled in the art may clearly understand that embodiments of this application may be implemented by hardware, firmware or a combination thereof. When embodiments of this application are implemented by software, the functions may be stored in a computer-readable medium or transmitted as one or more instructions or code on the computer-readable medium. The computer-readable medium includes a computer storage medium and a communication medium, where the communication medium includes any medium that facilitates a computer program to be transmitted from one place to another. The storage medium may be any available medium that can be accessed by a computer. The following is used as an example rather than a limitation: The computer-readable medium may include a RAM, a ROM, an electrically erasable programmable read-only memory (electrically erasable programmable read-only memory, EEPROM), a compact disc read-only memory (compact disc read-only memory, CD-ROM) or another optical disc storage, a magnetic disk storage medium or another magnetic storage device, or any other medium that can be used to carry or store expected program code in an instruction or data structure form and that can be accessed by a computer. In addition, any connection may be properly defined as a computer-readable medium. For example, if software is transmitted from a website, a server, or another remote source by using a coaxial cable, an optical fiber cable, a twisted pair, a digital subscriber line (digital subscriber line, DSL), or wireless technologies such as infrared, radio, and microwave, the coaxial cable, the optical fiber cable, the twisted pair, the DSL, or the wireless technologies such as infrared, radio, and microwave are included in a definition of the medium. For example, a disk (disk) and a disc (disc) used in embodiments of this application include a compact disc (compact disc, CD), a laser disc, an optical disc, a digital video disc (digital video disc, DVD), a floppy disk, and a Blu-ray disc. The disk generally copies data magnetically, and the disc copies data optically by using laser. The foregoing combination should also be included in the protection scope of the computer-readable medium.

In conclusion, the foregoing is merely embodiments of this application, but is not intended to limit the protection scope of this application. Any modification, equivalent replacement, improvement, or the like made based on the disclosure of this application shall fall within the protection scope of this application.

**Claims**

1. A communication method, comprising:

   receiving, by a first communication apparatus, a first synchronization broadcast block SSB, wherein the first SSB indicates that a current network is in a coverage enhancement mode;
   determining, by the first communication apparatus, a target resource of first system information based on the first SSB; and
   receiving, by the first communication apparatus, the first system information based on the target resource.

2. The method according to claim 1, wherein the first SSB comprises master system information MIB information, and the MIB information indicates that the current network is in the coverage enhancement mode.

3. The method according to claim 2, wherein the MIB information comprises eight bits, four bits indicate configuration information of a first resource set, the remaining four bits indicate first configuration information, and the first configuration information is used to determine a search space of a downlink control channel of the first system information;

   the configuration information of the first resource set comprises a multiplexing mode between the first SSB and the first resource set, a quantity of physical resource blocks PRBs occupied by the first resource set, a quantity of orthogonal frequency division multiplexing OFDM symbols occupied by the first resource set, and an offset between a lower boundary of the first SSB and a lower boundary of the first resource set in frequency domain; and
   when the multiplexing mode between the first SSB and the first resource set is a first mode, the first configuration information comprises a first index number, values of a parameter O and a parameter M, an index of the first OFDM symbol in the search space of the downlink control channel, and a quantity of search spaces of the downlink control channel in each slot; and the first index number is obtained based on binary-to-decimal conversion of the remaining four bits, the parameter O comprises information about a start position of the first detection window of the first system information, and the parameter M comprises information about a quantity of SSBs corresponding to one first resource set; or
   when the multiplexing mode between the first SSB and the first resource set is a second mode or a third mode, the first configuration information comprises the index of the first OFDM symbol in the search space of the downlink control channel and position information of the first OFDM symbol.

4. The method according to claim 3, wherein the first mode supports a first frequency band and a second frequency band, the first SSB and the first resource set are located on different symbols in time domain, a frequency domain range of the first resource set comprises the first SSB, a position of a start resource block RB of the first resource set is lower than or equal to that of a frequency domain lower boundary resource block RB of the first SSB, the first frequency band is a frequency band less than 6 GHz, and the second frequency band is a frequency band greater than 6 GHz; the second mode supports the second frequency band and a first subcarrier combination and a second subcarrier combination of the first SSB and the downlink control channel; and the third mode supports the second frequency band and the first subcarrier combination of the first SSB and the downlink control channel, and the first resource set occupies first two symbols of the first SSB in time domain.

5. The method according to claim 3 or 4, wherein one bit in the remaining four bits indicates that the current network is in the coverage enhancement mode, and the remaining three bits in the remaining four bits indicate the corresponding first configuration information.

6. The method according to any one of claims 1 to 5, wherein the method further comprises:

receiving, by the first communication apparatus, a second SSB, wherein the second SSB is used to retransmit at least one of the following parameters of the first SSB: the MIB information, a primary synchronization signal PSS, and a secondary synchronization signal SSS;
the first SSB corresponds to the first resource set, and the second SSB corresponds to a second resource set; and both the first resource set and the second resource set are one of a plurality of optional resource sets, and the first resource set is the same as or different from the second resource set; and
the first system information is one of a plurality of pieces of system information, and the plurality of optional resource sets are in a one-to-one correspondence with the plurality of pieces of system information.

7. The method according to claim 6, wherein the determining, by the first communication apparatus, a target resource of first system information based on the first SSB comprises:
determining, by the first communication apparatus, the target resource of the first system information based on the first SSB and/or the second SSB, wherein the target resource is a resource in one of the first resource set and the second resource set.

8. The method according to any one of claims 3 to 7, wherein when the multiplexing mode between the first SSB and the first resource set is the first mode, the MIB information comprises at least one reserved bit, and one reserved bit in the at least one reserved bit indicates that the current network is in the coverage enhancement mode.

9. The method according to claim 8, wherein the at least one reserved bit comprises an index bit of the first SSB in the MIB information and a spare bit in the MIB information.

10. The method according to claim 8, wherein the method further comprises: the at least one reserved bit indicates an index of a target SSB corresponding to the target resource.

11. The method according to any one of claims 3 to 7, wherein when the multiplexing mode between the first SSB and the first resource set is the first mode, a part of first index numbers in the first configuration information indicate that the current network is in a coverage normal mode, and the other part of first index numbers in the first configuration information indicate that the current network is in the coverage enhancement mode.

12. The method according to any one of claims 3 to 7, wherein when the multiplexing mode between the first SSB and the first resource set is the first mode and the first mode supports the second frequency band, the first configuration information comprises at least one reserved index, and the at least one reserved index indicates that the current network is in the coverage enhancement mode.

13. The method according to any one of claims 3 to 7, wherein when the multiplexing mode between the first SSB and the first resource set is the second mode or the third mode, the first SSB is associated with the search space of the downlink control channel, and the first SSB and the search space of the downlink control channel are located in a same slot of a same radio frame.

14. The method according to claim 13, wherein the first configuration information further comprises at least one of the following: an index of a target SSB, a value of X1, and a value of X2, wherein X1=X2+1, X2 is a quantity of times of retransmission, and the target SSB is an SSB corresponding to the target resource.

15. A communication method, comprising:

   determining, by a second communication apparatus, that a current network is in a coverage enhancement mode; and
   sending, by the second communication apparatus, a first synchronization broadcast block SSB, wherein the first SSB indicates that the current network is in the coverage enhancement mode.

16. The method according to claim 15, wherein the first SSB comprises master system information MIB information, and the MIB information indicates that the current network is in the coverage enhancement mode.

17. The method according to claim 16, wherein the MIB information comprises eight bits, four bits indicate configuration information of the first resource set, the remaining four bits indicate first configuration information, and the first configuration information is used to determine a search space of a downlink control channel of the first system information;

   the configuration information of the first resource set comprises a multiplexing mode between the first SSB and the first resource set, a quantity of physical resource blocks PRBs occupied by the first resource set, a quantity of orthogonal frequency division multiplexing OFDM symbols occupied by the first resource set, and an offset between a lower boundary of the first SSB and a lower boundary of the first resource set in frequency domain; and
   when the multiplexing mode between the first SSB and the first resource set is a first mode, the first configuration information comprises a first index number, values of a parameter O and a parameter M, an index of the first OFDM symbol in the search space of the downlink control channel, and a quantity of search spaces of the downlink control channel in each slot; and the first index number is obtained based on binary-to-decimal conversion of the remaining four bits, the parameter O comprises information about a start position of the first detection window of the first system information, and the parameter M comprises information about a quantity of SSBs corresponding to one first resource set; or
   when the multiplexing mode between the first SSB and the first resource set is a second mode or a third mode, the first configuration information comprises the index of the first OFDM symbol in the search space of the downlink control channel and position information of the first OFDM symbol.

18. The method according to claim 17, wherein the first mode supports a first frequency band and a second frequency band, the first SSB and the first resource set are located on different symbols in time domain, a frequency domain range of the first resource set comprises the first SSB, a position of a start resource block RB of the first resource set is lower than or equal to that of a frequency domain lower boundary resource block RB of the first SSB, the first frequency band is a frequency band less than 6 GHz, and the second frequency band is a frequency band greater than 6 GHz; the second mode supports the second frequency band and a first subcarrier combination and a second subcarrier combination of the first SSB and the downlink control channel; and the third mode supports the second frequency band and the first subcarrier combination of the first SSB and the downlink control channel, and the first resource set occupies first two symbols of the first SSB in time domain.

19. The method according to claim 17 or 18, wherein one bit in the remaining four bits indicates that the current network is in the coverage enhancement mode, and the remaining three bits in the remaining four bits indicate the corresponding first configuration information.

20. The method according to any one of claims 15 to 19, wherein after the determining, by a second communication apparatus, that a current network is in a coverage enhancement mode, the method further comprises:

   determining, by the second communication apparatus, the first SSB and a target resource; and
   sending, by the second communication apparatus, the first system information on the target resource.

21. The method according to claim 20, wherein the method further comprises:

   sending, by the second communication apparatus, a second SSB, wherein the second SSB is used to retransmit at least one of the following parameters of the first SSB: the MIB information, a primary synchronization signal PSS, and a secondary synchronization signal SSS;
   the first SSB corresponds to the first resource set, and the second SSB corresponds to a second resource set;

and both the first resource set and the second resource set are one of a plurality of optional resource sets, the first resource set is the same as or different from the second resource set, and the target resource is a resource in one of the first resource set and the second resource set; and

the first system information is one of a plurality of pieces of system information, and the plurality of optional resource sets are in a one-to-one correspondence with the plurality of pieces of system information.

22. The method according to any one of claims 17 to 21, wherein when the multiplexing mode between the first SSB and the first resource set is the first mode, the MIB information comprises at least one reserved bit, and one reserved bit in the at least one reserved bit indicates that the current network is in the coverage enhancement mode.

23. The method according to claim 22, wherein the at least one reserved bit comprises an index bit of the first SSB in the MIB information and a spare bit in the MIB information.

24. The method according to claim 22, wherein the method further comprises: the at least one reserved bit indicates an index of a target SSB corresponding to the target resource.

25. The method according to any one of claims 17 to 21, wherein when the multiplexing mode between the first SSB and the first resource set is the first mode, a part of first index numbers in the first configuration information indicate that the current network is in a coverage normal mode, and the other part of first index numbers in the first configuration information indicate that the current network is in the coverage enhancement mode.

26. The method according to any one of claims 17 to 21, wherein when the multiplexing mode between the first SSB and the first resource set is the first mode and the first mode supports the second frequency band, the first configuration information comprises at least one reserved index, and the at least one reserved index indicates that the current network is in the coverage enhancement mode.

27. The method according to any one of claims 17 to 21, wherein when the multiplexing mode between the first SSB and the first resource set is the second mode or the third mode, the first SSB is associated with the search space of the downlink control channel, and the first SSB and the search space of the downlink control channel are located in a same slot of a same radio frame.

28. The method according to claim 27, wherein the first configuration information further comprises at least one of the following: an index of a target SSB, a value of X1, and a value of X2, wherein X1=X2+1, X2 is a quantity of times of retransmission, and the target SSB is an SSB corresponding to the target resource.

29. A communication apparatus, comprising modules or units configured to perform the method according to any one of claims 1 to 14.

30. A communication apparatus, comprising modules or units configured to perform the method according to any one of claims 15 to 28.

31. A communication apparatus, comprising a processor coupled to a memory, wherein the memory is configured to store a computer program; and the processor is configured to execute the computer program stored in the memory, so that the communication apparatus performs the method according to any one of claims 1 to 14, or the communication apparatus performs the method according to any one of claims 15 to 28.

32. A computer-readable storage medium, comprising a computer program, wherein when the computer program runs on a processor, the method according to any one of claims 1 to 14 is performed, or the method according to any one of claims 15 to 28 is performed.

33. A computer program product comprising instructions, wherein when the computer program product is run on a computer, the method according to any one of claims 1 to 14 is performed, or the method according to any one of claims 15 to 28 is performed.

34. A communication system, wherein the communication system comprises a first communication apparatus configured to perform the method according to any one of claims 1 to 14, and a second communication apparatus configured to perform the method according to any one of claims 15 to 28.

Base station

Terminal device 1

Terminal device 2

FIG. 1

First mode

(a)

Second mode

(b)

Third mode

(c)

FIG. 2

```
┌──────────────────────────┐                    ┌──────────────────────────┐
│      Network device      │                    │      Terminal device     │
└──────────────────────────┘                    └──────────────────────────┘
             │                                                │
             ▼                                                │
┌──────────────────────────┐                                  │
│ S301: Determine that a   │                                  │
│ current network is in a  │                                  │
│ coverage enhancement mode│                                  │
└──────────────────────────┘                                  │
             │                                                ▼
             │   S302: Send a first synchronization  ┌──────────────────────────┐
             │        broadcast block SSB            │ S303: Determine a target │
             ├──────────────────────────────────────▶│ resource of first system │
             │                                       │ information based on the │
             │                                       │       first SSB          │
             │                                       └──────────────────────────┘
             │                                                │
             │                                                ▼
             │                                       ┌──────────────────────────┐
             │                                       │ S304: Receive the first  │
             │                                       │ system information from  │
             │                                       │ the network device based │
             │                                       │     on the first SSB     │
             │                                       └──────────────────────────┘
             │                                                │
             ▼                                                ▼
```

FIG. 3

```
┌─────────────────────────────────────────────────────────────────────────┐
│                    Communication apparatus 400                            │
│                                                                           │
│          ╱ 401                    ╱ 402                    ╱ 403           │
│   ┌─────────────────┐      ┌─────────────────┐     ┌─────────────────┐    │
│   │  Processing     │──────│  Transceiver    │─────│  Storage        │    │
│   │  module         │      │  module         │     │  module         │    │
│   └─────────────────┘      └─────────────────┘     └─────────────────┘    │
│                                                                           │
└─────────────────────────────────────────────────────────────────────────┘
```

FIG. 4

Communication apparatus 500

520

Processor

530

Memory

510

Transceiver

Transmitter

511

512

Receiver

513

**FIG. 5**

Chip 600

Processor 602

Interface circuit 601

Memory 603

**FIG. 6**

## INTERNATIONAL SEARCH REPORT

| | International application No. |
|---|---|
| | **PCT/CN2022/135450** |

| A. | CLASSIFICATION OF SUBJECT MATTER |
|---|---|
| | H04L1/00(2006.01)i;H04W4/70(2018.01)i |

According to International Patent Classification (IPC) or to both national classification and IPC

| B. | FIELDS SEARCHED |
|---|---|

Minimum documentation searched (classification system followed by classification symbols)

H04L, H04W

Documentation searched other than minimum documentation to the extent that such documents are included in the fields searched

Electronic data base consulted during the international search (name of data base and, where practicable, search terms used)

CNTXT, ENTXT, VEN, 3GPP, CNKI: 同步广播块, 覆盖增强, 增强覆盖, 覆盖普通, 普通覆盖, 模式, CE模式, 目标, 资源, 比特, 搜索空间, 索引, 边界, 偏移, 第一, 第二, 重传, 资源集合, SSB, MIB, sync broadcast block, coverage enhancement, enhanced coverage, coverage normal, normal coverage, mode, CE mode, target, resource, bit, search space, index, border, offset, first, second, retransmission, resource set

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2021102859 A1 (HUAWEI TECHNOLOGIES CO., LTD.) 03 June 2021 (2021-06-03) description, paragraphs 79-81 | 1-2, 15-16, 29-34 |
| A | WO 2021102859 A1 (HUAWEI TECHNOLOGIES CO., LTD.) 03 June 2021 (2021-06-03) entire document | 3-14, 17-28 |
| Y | CN 112689965 A (BEIJING XIAOMI MOBILE SOFTWARE CO., LTD.) 20 April 2021 (2021-04-20) claims 1-24 | 1-2, 15-16, 29-34 |
| A | CN 112689965 A (BEIJING XIAOMI MOBILE SOFTWARE CO., LTD.) 20 April 2021 (2021-04-20) entire document | 3-14, 17-28 |
| A | CN 113630861 A (VIVO COMMUNICATION TECHNOLOGY CO., LTD.) 09 November 2021 (2021-11-09) entire document | 1-34 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10.2月 2023（10.02.2023）** | **20 February 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/135450** |

**C.** **DOCUMENTS CONSIDERED TO BE RELEVANT**

| Category* | Citation of document, with indication, where appropriate, of the relevant passages | Relevant to claim No. |
| --- | --- | --- |
| A | WO 2020091500 A1 (LG ELECTRONICS INC.) 07 May 2020 (2020-05-07)<br>entire document | 1-34 |

Form PCT/ISA/210 (second sheet) (July 2022)

**INTERNATIONAL SEARCH REPORT**
Information on patent family members

| International application No. |
| --- |
| **PCT/CN2022/135450** |

| Patent document cited in search report | | | Publication date (day/month/year) | Patent family member(s) | Publication date (day/month/year) |
| --- | --- | --- | --- | --- | --- |
| WO | 2021102859 | A1 | 03 June 2021 | None | |
| CN | 112689965 | A | 20 April 2021 | None | |
| CN | 113630861 | A | 09 November 2021 | None | |
| WO | 2020091500 | A1 | 07 May 2020 | None | |

Form PCT/ISA/210 (patent family annex) (July 2022)

**REFERENCES CITED IN THE DESCRIPTION**

**Patent documents cited in the description**

- CN 202111617274